# EUROPEAN PATENT APPLICATION

(11) **EP 4 432 632 A1**
(43) Date of publication of application: **18.09.2024**
(21) Application number: 22892897.4
(22) Date of filing: 11.11.2022
(51) Int. Cl.: H04L 67/104, H02J 3/38, H02J 13/00

(54) **AD HOC DISTRIBUTED ENERGY RESOURCE MACHINE DATA AGGREGATION, DEEP LEARNING, AND FAULT-TOLERANT POWER SYSTEM, FOR CO-SIMULATION**

(30) Priority: 11.11.2021 US 202117454580
(71) Applicant: Hitachi, Ltd., Tokyo 100-8280 (JP)
(72) Inventor: YANG Bo, Santa Clara, California 950543003 (US); FUTAMURA Natsuhiko, Santa Clara, California 950543003 (US); YE Yanzhu, Santa Clara, California 950543003 (US); CHONGFUANGPRINYA Panitarn, Santa Clara, California 950543003 (US); ABE Masanori, Santa Clara, California 950543003 (US)
(74) Representative: MERH-IP Matias Erny Reichl Hoffmann Patentanwälte PartG mbB
(86) International application number: PCT/JP2022/042095
(87) International publication number: WO 2023/085399

(57) **Abstract**

A system including a peer-to-peer network and cloud data services for DER data acquisition and aggregation is provided. The system may perform a method for managing a plurality of DERs at an edge computing device (e.g., a super edge node or master edge node). The method may include receiving, from a cloud node, a data collection protocol. The method may also include transmitting the data collection protocol to each of a plurality of private-device edge nodes (e.g., a privately-owned mobile devices) in a peer-to-peer network and receiving, based on the data collection protocol, data relating to the plurality of DERs from the plurality of private-device edge nodes through the peer-to-peer network. The method may further include transmitting the received data to a cloud-based node (e.g., a cloud system). The system may provide a cost-effective infrastructure for data acquisition and system control.

## Description

### Field

The present disclosure is generally directed to distributed energy resources (DERs), and more specifically, to a method, system, apparatus, and software program for using a peer-to-peer communication network to aggregate machine data from DERs to form an autonomous, automatic, and fault tolerant DER operational network.

### Related Art

Power grids may benefit from grid services provided by DERs during normal operating conditions as well as natural disasters and system outages. For example, DERs are mostly inverter-based resources and can provide reaction power to support feeder voltage drop when needed. During grid failures, DERs may become the sole energy sources for local communities and can serve as emergency support to customers and healthcare facilities. Machine data from individual DERs can greatly enhance situational awareness for grid operators and enable intelligent controls for DERs to relieve the pressure on utility grids during systemwide failures.

One of the challenges to incorporating massive amount of machine data from DERs for distribution grid operation is the integration cost. Utilities traditionally use dedicated communication channels to monitor and control their electrical circuits. The communication infrastructure typically has dedicated communications to collect field measurements from Remote Terminal Units (RTUs) installed on the feeders and substations. It is very expensive to expand this dedicated communication infrastructure for interconnection with DERs due to limited bandwidths and coverages.

A second challenge to incorporating the machine data from the DERs, is coordinating DER operation and leveraging DER capacities for grid operation and new edge services. Current industry standards, i.e. IEEE 1547, require inverters to trip or cease operation during a grid failure. However, extending inverter operation during grid outage to support local customer needs may greatly benefit grid reliability and resilience. When there are no grid outages, DER can also be deployed for voltage support by providing more reactive powers

A third challenge is the lack of resilience of a current grid design. Distribution circuits may be configured to control energy transfer from a substation to the end customer loads. Most US distribution circuits are radial networks and rely on a substation as the sole energy source. When there is a natural disaster or outage that takes down the utility grid, the downstream customers may run out of power. DERs can bridge the gap and greatly enhance the resilience and flexibility of grids in the face of failures. While current communication infrastructure is serving grid operational needs, adding a peer-to-peer communication network for DER data aggregation may improve grid fault tolerance and avoid a single point of failure.

### SUMMARY

Example implementations described herein involve an innovative method for using a peer-to-peer communication network to aggregate machine data from DERs to form an autonomous, automatic, and fault tolerant DER operational network. The peer-to-peer communication network may include communication nodes in the cloud, dedicated edge computing devices (e.g., a super, or master, edge node), and privately-owned mobile devices (edge nodes). Elements of the peer-to-peer network may be configured to receive machine data from individual DERs, route data uploading to cloud ports (e.g., a super cloud node), facilitate node-to-node communication and publish commands from cloud ports. Software programs in the cloud may then cleanse, consolidate, and analyze the field data through a co-simulation framework combining a model solver and deep learning analysis.

Aspects of the present disclosure include a method for managing a plurality of DERs at an edge computing device (e.g., a super edge node or master edge node). The method may include receiving, from a cloud node, a data collection protocol. The method may also include transmitting the data collection protocol to each of a plurality of private-device edge nodes (e.g., a privately-owned mobile devices) in a peer-to-peer network and receiving, based on the data collection protocol, data relating to the plurality of DERs from the plurality of private-device edge nodes through the peer-to-peer network. The method may further include transmitting the received data to a cloud-based node (e.g., a cloud system).

Aspects of the present disclosure include a non-transitory computer readable medium, storing instructions for execution by a processor, which can involve instructions for managing a plurality of DERs at an edge computing device (e.g., a super edge node or master edge node). The instructions for managing the plurality of DERs may include instructions for receiving, from a cloud node, a data collection protocol. The instructions for managing the plurality of DERs may include instructions for transmitting the data collection protocol to each of a plurality of private-device edge nodes (e.g., a privately-owned mobile devices) in a peer-to-peer network and instructions for receiving, based on the data collection protocol, data relating to the plurality of DERs from the plurality of private-device edge nodes through the peer-to-peer network. The instructions for managing the plurality of DERs may include instructions for transmitting the received data to a cloud-based node (e.g., a super cloud node).

Aspects of the present disclosure include a system for managing a plurality of DERs at an edge computing device (e.g., a super edge node or master edge node), which can involve means for receiving, from a cloud node, a data collection protocol. The system may also include means for transmitting the data collection protocol to each of a plurality of private-device edge nodes (e.g., a privately-owned mobile devices) in a peer-to-peer network and means for receiving, based on the data collection protocol, data relating to the plurality of DERs from the plurality of private-device edge nodes through the peer-to-peer network. The system may further include means for transmitting the received data to a cloud-based node (e.g., a super cloud node).

Aspects of the present disclosure include an apparatus, which can involve a processor, configured to receive, from a cloud node, a data collection protocol. The processor may also be configured to transmit the data collection protocol to each of a plurality of private-device edge nodes (e.g., a privately-owned mobile devices) in a peer-to-peer network and to receive, based on the data collection protocol, data relating to the plurality of DERs from the plurality of private-device edge nodes through the peer-to-peer network. The processor may further be configured to transmit the received data to a cloud-based node (e.g., a super cloud node).

Aspects of the present disclosure include a method for managing a plurality of DERs at a cloud-based node. The method may further include generating, based on a desired system-level analysis, a data collection protocol for implementation at the plurality of DERs and transmitting, via a peer-to-peer network, the data collection protocol to the DERs via a set of edge nodes, the set of edge nodes comprising at least one master edge node (e.g., a super edge node) and a plurality of private-device edge nodes (e.g., privately-owned mobile devices). The method may also include receiving, based on the data collection protocol, data related to the plurality of DERs from edge nodes in the set of edge nodes. The method may further include generating a system recommendation based on the received data by processing the data with a machine trained network, the machine trained network having been trained with a combination of real-time data and simulation data.

Aspects of the present disclosure include a non-transitory computer readable medium, storing instructions for execution by a processor, which can involve instructions for managing a plurality of DERs at a cloud-based node. The instructions for managing the plurality of DERs may include instructions for generating, based on a desired system-level analysis, a data collection protocol for implementation at the plurality of DERs and instructions for transmitting, via a peer-to-peer network, the data collection protocol to the DERs via a set of edge nodes, the set of edge nodes comprising at least one master edge node (e.g., a super edge node) and a plurality of private-device edge nodes (e.g., privately-owned mobile devices). The instructions for managing the plurality of DERs may also include instructions for receiving, based on the data collection protocol, data related to the plurality of DERs from edge nodes in the set of edge nodes. The instructions for managing the plurality of DERs may further include instructions for generating a system recommendation based on the received data by processing the data with a machine trained network, the machine trained network having been trained with a combination of real-time data and simulation data.

Aspects of the present disclosure include a system for managing a plurality of DERs at a cloud-based node, which can involve means for generating, based on a desired system-level analysis, a data collection protocol for implementation at the plurality of DERs and means for transmitting, via a peer-to-peer network, the data collection protocol to the DERs via a set of edge nodes, the set of edge nodes comprising at least one master edge node (e.g., a super edge node) and a plurality of private-device edge nodes (e.g., privately-owned mobile devices). The system may also include means for receiving, based on the data collection protocol, data related to the plurality of DERs from edge nodes in the set of edge nodes. The system may further include means for generating a system recommendation based on the received data by processing the data with a machine trained network, the machine trained network having been trained with a combination of real-time data and simulation data.

Aspects of the present disclosure include an apparatus, which can involve a processor, configured to generate, based on a desired system-level analysis, a data collection protocol for implementation at the plurality of DERs and to transmit, via a peer-to-peer network, the data collection protocol to the DERs via a set of edge nodes, the set of edge nodes comprising at least one master edge node (e.g., a super edge node) and a plurality of private-device edge nodes (e.g., privately-owned mobile devices). The processor may also be configured to receive, based on the data collection protocol, data related to the plurality of DERs from edge nodes in the set of edge nodes. The processor may further be configured to generate a system recommendation based on the received data by processing the data with a machine trained network, the machine trained network having been trained with a combination of real-time data and simulation data.

Aspects of the present disclosure include a method for managing a plurality of DERs at an edge computing device. The method may include identifying a set of one or more private-device edge nodes capable of receiving data from one or more DERs and transmitting data received from a DER to the edge computing device. The method may also include registering the identified private-device edge nodes for inclusion in a peer-to-peer network and transmitting, to each of the identified private-device edge nodes in a peer-to-peer network, a data collection protocol for the DERs to implement. The method may further include receiving, based on the data collection protocol, data relating to the plurality of DERs from the identified private-device edge nodes through the peer-to-peer network.

Aspects of the present disclosure include a non-transitory computer readable medium, storing instructions for execution by a processor, which can involve instructions for managing a plurality of DERs at an edge computing device. The instructions for managing the plurality of DERs may include instructions for identifying a set of one or more private-device edge nodes capable of receiving data from one or more DERs and instructions for transmitting data received from a DER to the edge computing device. The instructions for managing the plurality of DERs may also include instructions for registering the identified private-device edge nodes for inclusion in a peer-to-peer network and instructions for transmitting, to each of the identified private-device edge nodes in a peer-to-peer network, a data collection protocol for the DERs to implement. The instructions for managing the plurality of DERs may further include instructions for receiving, based on the data collection protocol, data relating to the plurality of DERs from the identified private-device edge nodes through the peer-to-peer network.

Aspects of the present disclosure include a system for managing a plurality of DERs at an edge computing device, which can involve means for identifying a set of one or more private-device edge nodes capable of receiving data from one or more DERs and means for transmitting data received from a DER to the edge computing device. The system may also include means for registering the identified private-device edge nodes for inclusion in a peer-to-peer network and means for transmitting, to each of the identified private-device edge nodes in a peer-to-peer network, a data collection protocol for the DERs to implement. The system may further include means for receiving, based on the data collection protocol, data relating to the plurality of DERs from the identified private-device edge nodes through the peer-to-peer network.

Aspects of the present disclosure include an apparatus for managing a plurality of DERs at an edge computing device, which can involve a processor, configured to identify a set of one or more private-device edge nodes capable of receiving data from one or more DERs and to transmit data received from a DER to the edge computing device. The processor may also be configured to register the identified private-device edge nodes for inclusion in a peer-to-peer network and to transmit, to each of the identified private-device edge nodes in a peer-to-peer network, a data collection protocol for the DERs to implement. The processor may further be configured to receive, based on the data collection protocol, data relating to the plurality of DERs from the identified private-device edge nodes through the peer-to-peer network.

### BRIEF DESCRIPTION OF DRAWINGS

FIG. 1 is a diagram illustrating multiple DERs and/or communicable loads interacting with a peer-to-peer network and cloud software.
FIG. 2 is a high-level view of a system architecture of some aspects of the invention.
FIG. 3 illustrates a communication infrastructure of a peer-to-peer communication network in communication with a cloud-based data processing component.
FIG. 4 is a diagram illustrating components of a system architecture of some aspects of the invention.
FIG. 5 illustrates components of an edge node and a mobile application executing on the edge node.
FIG. 6 is a flow diagram illustrating a method for a DER collecting, processing, and transmitting data to an edge node.
FIG. 7 is a flow diagram illustrating a method for a super edge node to facilitate DER data collection.
FIG. 8 is a flow diagram illustrating a method for a super edge node to recruit privately-owned devices to facilitate DER data collection.
FIG. 9 is a flow diagram illustrating a method for a super edge node to recruit privately-owned devices to facilitate DER data collection.
FIG. 10 is a flow diagram illustrating a method for a super edge node to recruit privately-owned devices to facilitate DER data collection.
FIG. 11 is a flow diagram illustrating a method for a super edge node to facilitate DER data collection.
FIG. 12 is a flow diagram illustrating a method for a cloud program to facilitate DER data collection and system control.
FIG. 13 is a flow diagram illustrating a method for a cloud program to facilitate DER data collection and system control.
FIG. 14 is a flow diagram illustrating a method for a cloud program to facilitate DER data collection and system control.
FIG. 15 is a flow diagram illustrating a method for a cloud program to facilitate DER data collection and system control.
FIG. 16 illustrates an example computing environment with an example computer device suitable for use in some example implementations.

### DETAILED DESCRIPTION

The following detailed description provides details of the figures and example implementations of the present application. Reference numerals and descriptions of redundant elements between figures are omitted for clarity. Terms used throughout the description are provided as examples and are not intended to be limiting. For example, the use of the term "automatic" may involve fully automatic or semi-automatic implementations involving user or administrator control over certain aspects of the implementation, depending on the desired implementation of one of the ordinary skills in the art practicing implementations of the present application. Selection can be conducted by a user through a user interface or other input means, or can be implemented through a desired algorithm. Example implementations as described herein can be utilized either singularly or in combination and the functionality of the example implementations can be implemented through any means according to the desired implementations.

Example implementations described herein involve an innovative method of using a peer-to-peer communication network to aggregate machine data from DERs to form an autonomous, automatic, and fault tolerant DER operational network. The peer-to-peer communication network may include communication nodes in the cloud, dedicated edge computing devices (e.g., a super, or master, edge node), and privately-owned mobile devices (edge nodes). Elements of the peer-to-peer network may be configured to receive machine data from individual DERs, route data uploading to cloud ports (e.g., a super cloud node), facilitate node-to-node communication and publish commands from cloud ports. Software programs in the cloud may then cleanse, consolidate, and analyze the field data through a co-simulation framework combining a model solver and deep learning analysis.

Aspects of the invention described herein may improve two-way communication between massive numbers of DERs (e.g., thousands to hundreds of thousands), especially behind-the-meter DERs, and cloud infrastructure without expensive infrastructure investment. Effective data acquisition from DERs and data preparation for a variety of analytics on the edge and in the cloud may be improved by aspects of the invention. Some aspects of the invention may improve DER operational insights and coordination for grid operation during normal condition and outages and may provide a scalable and fault tolerant system design for improved grid resilience.

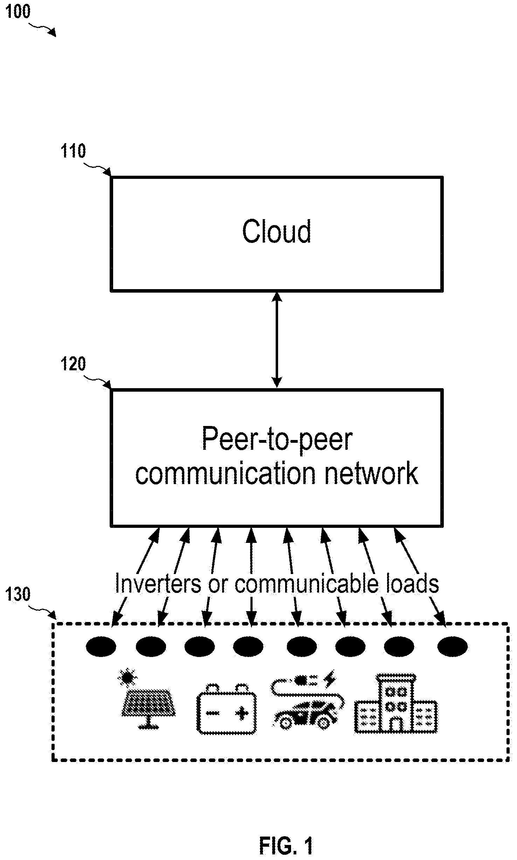

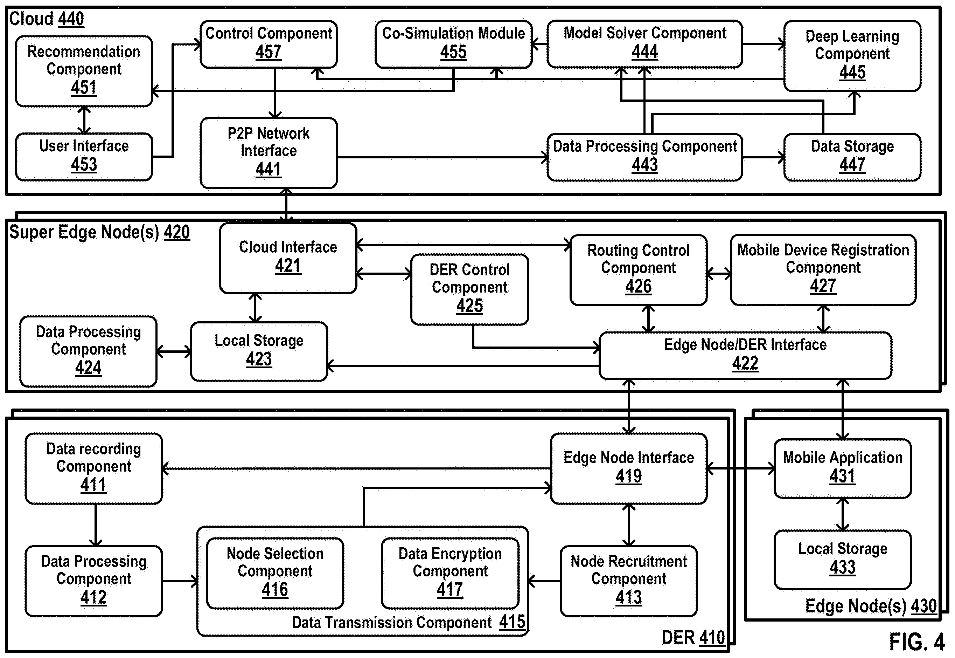

FIG. 1 is a diagram 100 illustrating multiple DERs and/or communicable loads interacting with a peer-to-peer network and cloud software. Diagram 100 illustrates a first cloud component 110 in communication with a peer-to-peer communication network 120. Diagram 100 further illustrates peer-to-peer communication network 120 in communication with a set of inverters or communicable loads 130 (e.g., DERs) for data exchange between the set of inverters or communicable loads 130 and the cloud component 110. As described below, for example, in relation to FIG. 4, the cloud component 110, in some aspects, may provide data storage, a communication interface, data analytics, and an interface with other applications. In some aspects, the peer-to-peer network 120 may provide necessary communication infrastructure to connect with the inverters or communicable loads 130 (e.g., DERs), receive data, and reroute received data to cloud component 110 as described below in relation, for example, to FIG. 4.

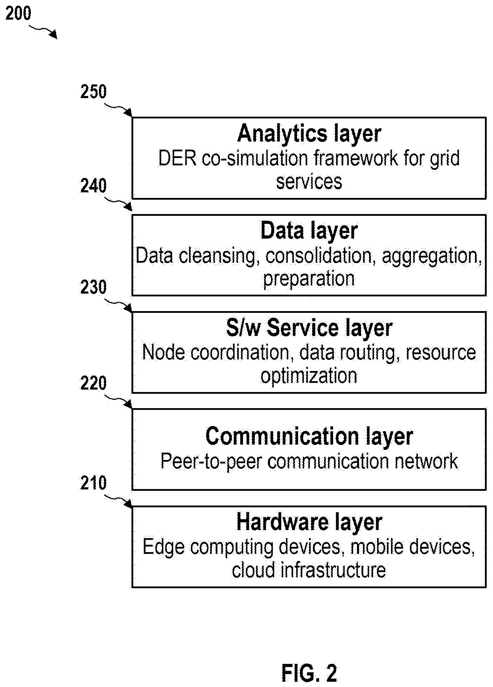

FIG. 2 is a high-level view of a system 200 of some aspects of the invention. FIG. 2 illustrates a hardware layer 210 including a dedicated cloud infrastructure (e.g., cloud component 110 of FIG. 1), a set of dedicated edge computing devices (e.g., super nodes or master edge nodes), a set of privately-owned mobile devices, and a set of DERs (e.g., inverters or communicable loads 130 of FIG. 1). In some aspects, the dedicated edge computing devices and cloud infrastructure make up the backbone of the system (e.g., the elements owned or operated by an energy provider controlling the DERs). The hardware system, in some aspects, may be installed to cover a targeted control area. In some aspects, the set of privately-owned mobile devices of the hardware layer 210, may be recruited on demand. For example, the set of privately-owned mobile devices may be recruited to enable communication between the dedicated edge computing devices (e.g., super nodes or master edge nodes of a peer-to-peer communication network 120) and the DERs. The members of the set of privately-owned mobile devices may change over time, for example, as privately-owned mobile devices move to, or from, an area covering DERs of the targeted DERs.

The system 200 may also include a communication layer 220. In some aspects, the communication layer 220 may include a peer-to-peer network including the cloud infrastructure (e.g., cloud component 110 of FIG. 1), dedicated edge computing devices (e.g., super nodes or master edge nodes), a set of privately-owned mobile devices, and DERs. In some aspects, DERs may scan for nearby mobile devices and super edge nodes for inclusion in the communication network (e.g., a peer-to-peer network) for transmitting data from the DER to the cloud. Once a cohort of nodes (e.g., privately-owned mobile devices) and super edge nodes of the peer-to-peer communication network are identified, data may be routed through one or more nodes of the peer-to-peer communication network to a super cloud node (e.g., the cloud).

The system 200, in some aspects, further includes a software service layer 230. In some aspects, the software service layer 230 may include components implemented on (executed by) the devices that make up hardware layer 210. For example, certain components of the software service layer 230 may be implemented on one or more privately-owned mobile devices, one or more super edge nodes, and/or one or more cloud nodes of the hardware layer 210 (and communication layer 220). The software service layer, in some aspects, may provide storage, computing, analytics, and traffic management functions.

System 200 may also include a data layer 240. The data layer may include functions such as transmitting data through the peer-to-peer communication network to the cloud. In some aspects, the data layer may include data that has been joined, cleansed, consolidated, and benchmarked for analysis by an analytics layer 250. The analytics layer 250 may include a co-simulation analytical framework that may be implemented on the cloud. The analytics layer 250 may define a data inventory (e.g., a data collection protocol for implementation at the DERs). The analytics layer 250, in some aspects, may perform quantitative analysis to generate insights and/or recommendation to support users' decision. While the components of system 200 are illustrated as conceptually separate, it is to be understood that the components may overlap in the physical implementation. As described above, the devices of the hardware layer 210 may make up the communication layer 220, may execute the software service layer 230, may provide processing and storage for the data layer 240, and may execute the analytics layer 250.

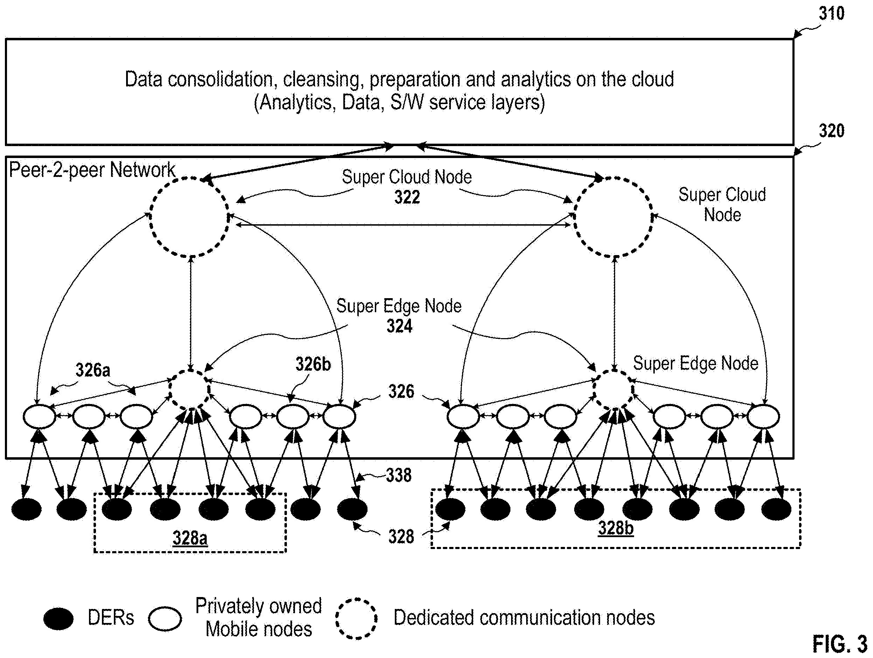

FIG. 3 illustrates a communication infrastructure of a peer-to-peer communication network 320 in communication with a cloud-based data processing component (e.g., cloud 310). The DERs 328 (or an inverter of a DER 328) may transmit data packets to connected nodes (e.g., privately-owned mobile devices 326 or super edge node 324) through an HTTP protocol (e.g., via communication link 338). A local peer-to-peer communication subnetwork within peer-to-peer communication network 320 may be formed by each of the super edge nodes 324 (also referred to as master edge nodes) and nearby privately-owned mobile nodes 326. As illustrated, DERs 328 may communicate data to the peer-to-peer communication network 320 via a privately-owned mobile node 326 and/or a super edge node 324. In some aspects, a DER 328 may encrypt data to be transmitted to a privately-owned mobile node 326. In some aspects, a DER 328 may not encrypt data to be transmitted to a super edge node 324.

Privately-owned mobile nodes 326 may include personal smart phones, tablet devices, home hubs, or other electronic devices with communication capabilities, such as cellular, radio, Bluetooth, zigbee, etc. Privately-owned mobile device owners may enable inclusion into the peer-to-peer communication network 320 by installing a mobile application to formally register to become a candidate for inclusion as a node 326 in the peer-to-peer communication network 320. In some aspects, a privately-owned mobile device owner may receive incentives (e.g. credit or awards) based on their contribution to the peer-to-peer communication network 320. Their performance (e.g., contribution), in some aspects, may be measured by data throughput and local storage capacity that may be validated by a super edge node 324. Installing the mobile application, in some aspects, may not allow the mobile device owner to access proprietary information embedded in the data packets. Additionally, the installation of the mobile application may not interfere with normal use of the mobile devices.

Super edge nodes 324, in some aspects, may, or may not, communicate directly with each other. In some aspects, each super edge node 324 may be capable of direct communication with a first set of DERs (e.g., DERs 328a) and indirect communication with a second set of DERs (e.g., DERs 328b). As illustrated in FIG. 3, the first set of DERs 328a and the second set of DERs 328b for a given super edge node 324 may overlap and allow flexibility in routing data based on a state of the peer-to-peer communication network. Each super edge node, in some aspects may additionally be capable of communicating directly with a first set of privately-owned mobile devices (e.g., including privately-owned mobile devices 326a) and indirectly with a second set of privately-owned mobile devices (e.g., including privately-owned mobile device 326b). As illustrated in FIG. 3, the first set of privately-owned mobile devices 326a and the second set of privately-owned mobile devices 326b for a given super edge node 324 may overlap and allow flexibility in routing data based on a state of the peer-to-peer communication network. For example, the super edge node may be capable of communicating with a privately-owned mobile device 326a either directly or via a first intermediate privately-owned mobile device 326b in the second set of privately-owned mobile devices and a second intermediate privately-owned mobile device 326a in the first set of privately-owned mobile devices.

In some aspects, the nodes (e.g., 324, 326, and 328) of the peer-to-peer communication network 320 may be configured (e.g., by the super edge node and ultimately the cloud software) to route the data via a shortest path to the super cloud node 322. The nodes 324, 326, and 328, in some aspects, may be configured to route the data based on other characteristics of the connections in the peer-to-peer communication network 320 such as bandwidth, latency, reliability of a connection, etc. which may lead to data being transmitted via a longer path. The connection (e.g., a set of routes) between a super cloud node 322 and a super edge node 324, in some aspects, is configured to meet bandwidth (e.g., an optimized bandwidth) and redundancy standards that ensure reliable data exchange. The link between other nodes (e.g., privately-owned mobile devices 326 or DERs 328) and a super cloud node 322 may be dynamically arranged to accommodate a current state of the peer-to-peer communication network. When data arrives at a super cloud node, in some aspects, the data will enter a pipeline of services for cleansing, consolidation, preparation and analysis.

In some aspects, the super edge nodes serve as the core communication hub for each mobile node and may include data storage, edge computing, and traffic management functions. Additionally, each privately-owned mobile device 326 may provide limited local storage capabilities. For example, if a batch data transmission mode is enabled, or if a connection to a super edge node is interrupted, a privately-owned mobile device may store data received from a DER until a transmission time or trigger occurs, at which time the privately-owned mobile device may transmit the stored data. Data transmitted through the peer-to-peer communication network 320 that arrives at a super cloud node 322 may enter a pipeline of services for cleansing, consolidation, preparation, and analysis.

FIG. 4 is a diagram illustrating components of a system architecture of some aspects of the invention. FIG. 4 illustrates a DER 410 including a data recording component 411 for recording data at the DER 410. The data recording component 411, in some aspects, records multiple types of data available to the DER. The data recording component 411 may provide recorded data to a data processing component 412 that processes the recorded data based on a data protocol received from the cloud (e.g., via a super edge node 420 and/or an edge node 430). For example, data processing component 412 may select a subset of the recorded data (e.g., certain types of data or a portion of the data) based on the specific type or granularity of the data specified in the data protocol received from the cloud.

DER 410 may also include a node recruitment component 413. Node recruitment component 413 may identify edge nodes 430 (e.g., privately-owned edge node) or super edge nodes 420 available to transmit data to the cloud. Available edge nodes 430 or super edge nodes 420 may be based on proximity and, for privately-owned devices (e.g., edge nodes 430), whether the device is registered with the peer-to-peer network (e.g., with the super edge node 420). The node recruitment component 413 may provide the identities of the available edge nodes 430 and super edge nodes 420.

The processed data may be provided to a data transmission component 415. The data transmission component 415 may be configured to select at least one edge node (e.g., super edge node 420 or edge node 430) using node selection component 416. In some aspects, if the at least one selected edge node includes a privately-owned edge node, the data transmission component 415 may encrypt the data for transmission to the privately-owned edge node using the data encryption component 417. In some aspects, data is encrypted at the DER for transmission to both super edge nodes 420 and edge nodes 430 for transmission across unsecure networks. Data packets may be encrypted, in some aspects, based on joint credentials defined by DER 410 and edge nodes (e.g., super edge nodes 420 or edge nodes 430). The processed data (e.g., encrypted or unencrypted processed data based on the data protocol) may then be transmitted via edge node interface 419 to the at least one selected edge node (e.g., 420 or 430).

The system architecture illustrated in FIG. 4 may include an edge node 430. Edge node 430 may be a privately-owned edge node that is recruited into the peer-to-peer network by the DER or that is registered with the super edge node 420. The edge node 430 may be a privately-owned mobile device that has a mobile application 431 installed that allows the privately-owned mobile device to participate in the peer-to-peer network. The mobile application may register the edge node 430 with the super edge node 420 and advertise its availability to a DER 410 to act as an edge node connecting the DER 410 to the super edge node 420. The edge node 430 may include a local storage 433 that is accessible to the mobile application for storing data received from the DER 410. In some aspects, in the case of a connection failure between the edge node 430 and the super edge node 420, local storage 433 may store received data until a connection to a super edge node 420 can be reestablished and the stored data can be transmitted to the super edge node 420. In some aspects, edge nodes 430 may communicate with the super edge node 420 via other edge nodes 430.

Super edge node 420 may include an edge node/DER interface 422. The edge node DER interface 422 may receive DER data directly from DERs 410 or via edge nodes 430 (or other super edge nodes 420). The DER data may be stored in a local storage 423. The local storage 423 may be capable, in some aspects, of storing more data (e.g., two weeks or one month worth of data) than the local storage 433 of an edge node 430. The data received from the DERs 410 may be stored in the local storage 423 and be processed by a data processing component 424. Data processing component 424 may decrypt encrypted DER data and may organize and/or aggregate data received from multiple DERs. For example, a DER 410 may transmit its data via multiple edge nodes and the data processing component 424 may identify and remove the duplicate data before transmitting the data to the cloud 440. The data processing component 424, in some aspects, may aggregate the DER data (i.e., the data received from multiple DERs) to reduce the amount of data transmitted to the cloud 440. For example, the DER data from multiple DERs may be aggregated to indicate available capacity of the DERs in one or more sections of an electrical grid (e.g., based on a current output of the DERs and a current load reported in the DER data). The data may also be organized, e.g., as time-series data before transmitting to the cloud 440.

Super edge node 420 may also include control components such as DER control component 425 and routing control component 426. DER control component 425 may provide control instructions to the DERs 410 that are received from the cloud 440. The control instructions, in some aspects, may include operating mode indications such as a constant voltage operating mode and a constant power operating mode for at least one of an energy production or energy storage function of the DER. In some aspects, the control instructions may indicate a reference value related to a characteristic of at least one DER, e.g., a voltage magnitude, a power factor, or a reactive power operating point for one of an energy production or energy storage function of the DER. Additional control instructions or indications may be provided based on the nature and/or functionality of the DER.

Routing control component 426 may monitor traffic through the peer-to-peer network and determine a route, or routes, for data transmission from each DER in a local peer-to-peer network (e.g., a peer-to-peer network connected to the cloud through the super edge node 420). In some aspects, the routing control component 426 optimizes data paths based on link capacity and other network properties to ensure delivery of the DER data. In some aspects, the optimization includes indicating redundant routes (e.g., via multiple edge nodes) for a particular DER 410 to use to transmit data to the super edge node 420.

The super edge node, in some aspects, may also include mobile device registration component 427. Mobile device registration component 427, in some aspects, may register private-device edge nodes (e.g., privately-owned mobile devices) for inclusion in the peer-to-peer network. In some aspects, this registration is through an interaction with a mobile application (e.g., mobile application 431) on an edge node 430. The registration may include selecting a username and password to set up an account with the system. As the private-device edge nodes (e.g., privately-owned mobile devices) provide connectivity and DER data to the super edge node 420, the mobile device registration component 427 may then validate that the data has been received from the private-device edge node and credit the account associated with the private-device edge node based on the validation of the data being received. In some aspects the validation of the data includes validating the encryption uses an expected key (e.g., that the data can be decrypted) and may include additional validation of the decrypted data. The credits may be assigned based on one or more of an amount of data received from devices (e.g., at least one private-device edge node) associated with an account, a time that the devices associated with the account participate in the peer-to-peer network, and/or the amount of resources dedicated to the mobile application 431 on the devices (e.g., edge nodes 430) associated with the account.

FIG. 4 further illustrates that super edge node 420 may connect to a cloud 440 via a cloud interface 421 of the super edge node 420 and a peer-to-peer network interface 441 of the cloud 440. The cloud 440 may be implemented as a physical or virtual system in a privately-run cloud (using on-premises servers and/or hardware), a publicly-hosted cloud (e.g., a private cloud hosted by a cloud provider such as Amazon or Google), or a hybrid cloud (e.g., combining virtual and physical resources and/or on-premises and cloud provider networks). As data is provided to the cloud 440 from multiple super edge nodes 420 regarding the multiple DERs 410, the DER data (e.g., data packets transmitted over a packet-based network) may be provided (pushed) to a service pipeline for decoding, cleansing, and consolidation. In some aspects, the service pipeline may be represented by data processing component 443 that receives DER data from peer-to-peer network interface 441 and performs the decoding, cleansing, and consolidation operations. For example, data processing component 443 may receive time-series data from multiple super edge nodes 420 that is out of sync (e.g., due to a link failure and reconnection) and may then identify DER data sets corresponding to a same time to generate time-series data for the system. In some aspects, the consolidation may include generating system-level values for available capacity based on the available capacity reported by each super edge node 420. Data processing component 443 may also perform a health monitoring function for the system based on data received from the super edge nodes indicating a state (e.g., failed or active) of each edge node 430 or DER 410 connected to the super edge node 420.

The data processing component 443 may then provide the processed data to one or more additional components for further analysis or storage. For example, the data processing component 443 may transmit processed data to a data storage 447 for long-term storage (e.g., for offline or non-runtime analysis), a deep learning component 445 for processing via a machine-trained network included in the deep learning component 445, and a model solver component 444 that generates simulation data for training the deep learning component 445. In some aspects, the processed DER data may also be provided to a co-simulation module 455 by one or more of the data processing component 443, the deep learning component 445, or the model solver component 444.

The deep learning component 445 may perform a real-time analysis on the received DER data to generate a recommendation for an action for a system manager and/or an updated data protocol. The updated data protocol (e.g., a new data inventory) for future data acquisition may be used to define a dynamic and adaptive data acquisition method. In some aspects, the model solver component 444 may generate simulated data based on a model of the physical system (e.g., the electrical grid including loads, sources, transmission sources, etc.) and the DER data received from the data processing component 443. The simulation data generated by the model solver component 444 may be provided to the deep learning component 445 to be used as (online) training data for a machine-trained network along with the real-time data received from the data processing component 443. Deep learning component 445 may transmit the output of the trained network to at least one of co-simulation module 455 and control component 457. In some aspects, the deep learning component 445 transmits an updated data inventory (e.g., a data protocol) identifying data to request from DERs 410 to the control component 457.

The co-simulation module 455 may receive input from the model solver component 444 and/or the deep learning component 445. The co-simulation module 455 may then perform a data analysis to generate control recommendations, including operational insights, statistical, and mathematical models for decision support. In some aspects, the control recommendation may relate to an operating mode for the DER in a set of operating modes. For example, the set of operating modes may include one of a constant voltage operating mode and a constant power operating mode and the set of operating modes may be associated with one of an energy production or energy storage function of the DER. In some aspects, the recommendation may indicate a reference value related to a characteristic of at least one DER. For example, the reference value related to the characteristic may relate to one or more of a voltage magnitude, a power factor, and a reactive power operating point. As for the set of operation mode recommendations, the reference value may be associated with one of an energy production or energy storage function of the DER. In some aspects, the control recommendation may relate to local power generation and provision by the plurality of DERs. The control recommendations, including operational insights, statistical, and mathematical models may be transmitted to a recommendation component 451 for display to a user.

The recommendation component 451, in some aspects, prepares the recommendation for display to a user via the user interface 453. The display via user interface 453 may include a visual depiction of the state of the system along with relevant statistical data and a set of recommendations based on the DER data. The visual depiction of the state of the system along with relevant statistical data may be presented to a user to inform a decision between a set of recommended actions (or a decision to reject the recommendations). The set of recommendations, in some aspects, may be reviewed by a user, e.g., a grid operator, and inputs to the user interface 453 may then be used to define a finalized control action/command. For example, the input (e.g., from a user or system administrator) to the user interface 453 may include a selection of a recommended action or a selection indicating a different action. The user input and/or the finalized control action/command may then be provided to control component 457.

Control component 457 may then generate a set of control data for implementing the selection received from the user interface 453 (e.g., the finalized control action/command). The control component may also generate an updated data protocol (e.g., may update the type or frequency of the data collected at the DER) for implementation by the DERs based on input from the deep learning component 445. The control data (including the updated data protocol) generated by control component 457 may then be transmitted to each super edge node 420 in a set of super edge nodes. The control data may be transmitted via peer-to-peer interface 441 and cloud interface 421. In some aspects, the connection between the cloud 440 and the super edge node 420 may be a dedicated communication channel. Each super edge node 420 may process the control data at the DER control component 425 and/or the routing control component 426 to generate DER-specific control data (e.g., based on the manufacturer of the DER and the required operational mode or reference value associated with the DER).

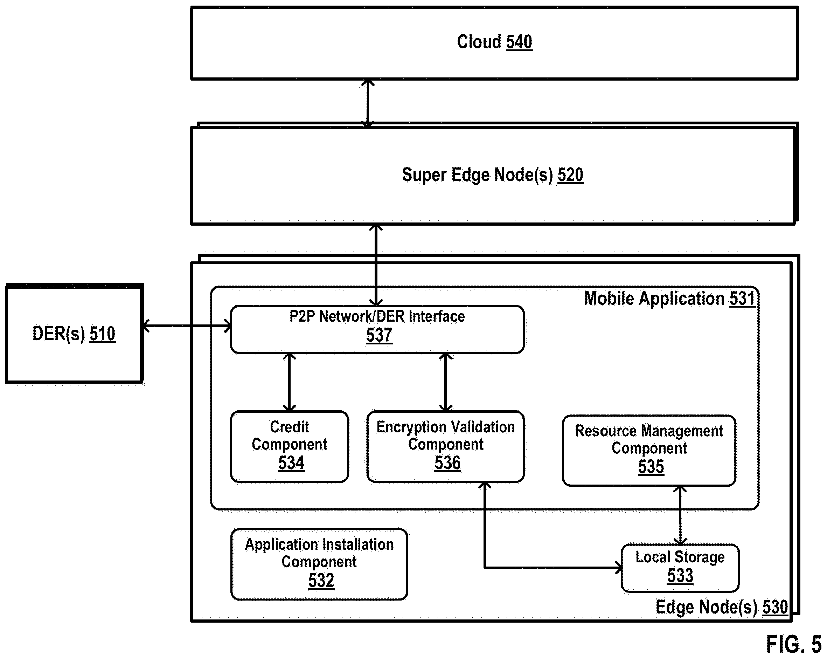

FIG. 5 illustrates components of an edge node 530 and a mobile application 531 executing on the edge node 530. As illustrated in FIG. 4, edge node 530 may connect to one or more DERs 510 or super edge nodes 520. Edge node 530 includes an application installation component 532 (e.g., as part of an operating system) that allows a user of the edge node 530 (e.g., a privately-owned mobile device) to install the mobile application 531 on the edge node 530. The mobile application 531 may include a peer-to-peer network interface 537 for communicating with DERs 510 and super edge nodes 520. The peer-to-peer interface 537 may allow the mobile application to be identified to the DERs 510 and the super edge nodes 520 as available to serve as an edge node in the peer-to-peer network and to receive and transmit data from the DERs 510 and super edge nodes 520.

The mobile application may further include an encryption validation component 536 that receives encrypted data from the DER and is configured to validate the encryption without being able to decode the DER data. The encryption validation component 536 may provide validated encrypted DER data to a local storage 533 for storage until a transmission time (e.g., based on a request from a super edge node 520, based on the expiration of a timer, or based on a reconnection after an interruption). The amount of resources, e.g., memory/storage resources or processing resources, available to the mobile application may be negotiated with a super edge node 520 and may be controlled locally by resource management component 535. Based on the data transmitted by the edge node 530 and/or the edge node resources (e.g., local storage 533) made available (or allocated) to the mobile application 531, the account associated with the edge node 530 may be credited via credit component 534 that may store account information (e.g., an account identifier, a current balance, etc.).

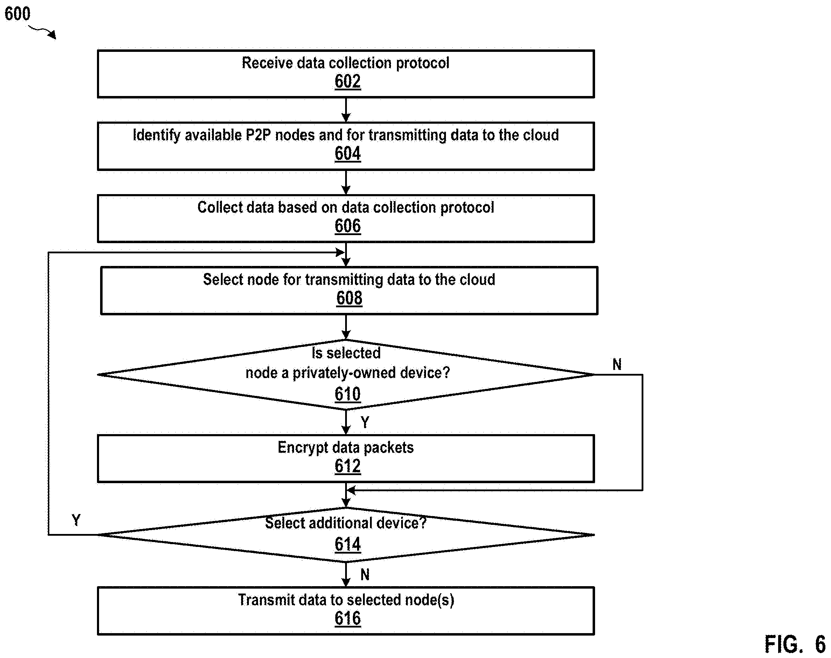

FIG. 6 is a flow diagram 600 illustrating a method for a DER collecting, processing, and transmitting data to an edge node (e.g., edge node 430 or super edge node 420). The method may be performed by a DER (e.g., DER 328, 410, or 510). At 602, the DER may receive a data collection protocol. The data collection protocol may indicate a set of data types to collect and a sampling value indicating an amount of data associated with the set of data types to transmit. In some aspects, the sampling value may be different for different types of data (e.g., based on different rates of fluctuations in associated values). In some aspects, the data collection protocol indicates for the DER to collect a set of data that includes less than all data available at the DER. For example, the data collection protocol may indicate for the DER to collect data every second or minute for transmission instead of the available data that is available at a finer granularity (e.g., milliseconds). For example, referring to FIG. 4, the DER 410 may receive a data collection protocol from the cloud 440, and specifically the control component 457, via super edge node 420 or edge node 430.

At 604, the DER may identify available peer-to-peer nodes (e.g., edge nodes). The available edge nodes may be identified by the DER based on their proximity to the DER and their registration with a super edge node. The identification may be based on an announcement/advertisement made by an edge node (e.g., a privately-owned mobile device) or based on a communication from a super edge node. For example, referring to FIG. 4, the DER 410 may identify, using a node recruitment component 413, a set of super edge nodes 420 and a set of edge nodes 430 available for transmitting DER data to the cloud 440.

At 606, the DER may collect data (e.g., DER data) based on the data collection protocol received at 602. In some aspects, the data collection may include a first operation that collects multiple types of data at a particular (e.g., finest) granularity and a second operation that filters (e.g., selects indicated types of data with an indicated granularity) the collected data based on the data collection protocol received at 602. For example, referring to FIG. 4, the DER may include a data recording component 411 that records multiple types of data and a data processing component 412 that filters the collected data based on the data collection protocol received from the cloud 440 via the super edge node 420 or the edge node 430.

The DER, at 608, may select an identified node for transmitting data to the cloud. The identified node may be selected from the available nodes identified at 604. The selected nodes may be selected, at 608, based on routing control data received from a super edge node (e.g., directly or via a set of intermediate edge node). In some aspects, the selection of edge nodes is based on advertised characteristics (e.g., bandwidth connection quality, etc.) of the identified available edge node. For example, referring to FIG. 4, a DER 410 may select, using node selection component 416 of data transmission component 415, an edge node for transmitting data to the cloud 440.

At 610, the DER may determine if the selected edge node is a privately-owned mobile device. In some aspects, the determination may be based on information associated with the selected edge node during the identification process. For example, referring to FIG. 4, a node selection component 416 may determine whether the selected node is a privately-owned mobile device.

If the selected edge node is determined, at 610, to be a privately-owned mobile device, the DER may encrypt, at 612, the data collected at 606. For example, referring to FIG. 4, data encryption component 417 may encrypt collected data provided to the data transmission component 415. The encryption may be an encryption negotiated between the DER and the edge node or a between the super edge node and the DER. The encryption may be, for example, a blockchain-based encryption. In some aspects, an encryption negotiated between a DER and a super edge node is capable of being validated by an intermediate edge node without being able to decrypt the data packet or decode the transmitted DER data. In some aspects, the determination at 610 may be skipped if DER data is encrypted for all destination edge nodes (e.g., whether super edge nodes or privately-owned mobile device).

If the DER determines, at 610, that the selected node is not a privately-owned mobile device, the DER may determine, at 614, if an additional node will be selected. If an additional node will be selected, the DER may select, at 608, a node for transmitting data to the cloud and continue the method as described above. In some aspects, an additional node will be selected based on an indication, e.g., from a super edge node, of a number of edge nodes to use to transmit DER data to the super edge node. The super edge node may indicate to select more than one node (e.g., including at least one privately-owned mobile devices), in some aspects, to ensure transmission of the DER to the super edge node and the cloud in the case of a link failure between one of the edge nodes and the peer-to-peer network. For example, referring to FIG. 4, the node selection component 416 may determine whether an additional edge node will be selected.

If the DER determines, at 614, that no additional nodes will be selected, the DER may transmit, at 616, the DER data (e.g., encrypted or unencrypted DER data depending on a selected node) to the selected edge node or nodes. The transmission of the DER data may use public networks. The data may be transmitted as data packets in a packet-based network (e.g., the Internet). For example, referring to FIG. 4, the data transmission component 415 may transmit the DER data to edge node interface 419 for delivery to a super edge node 420 or an edge node 430 for delivery to the cloud 440.

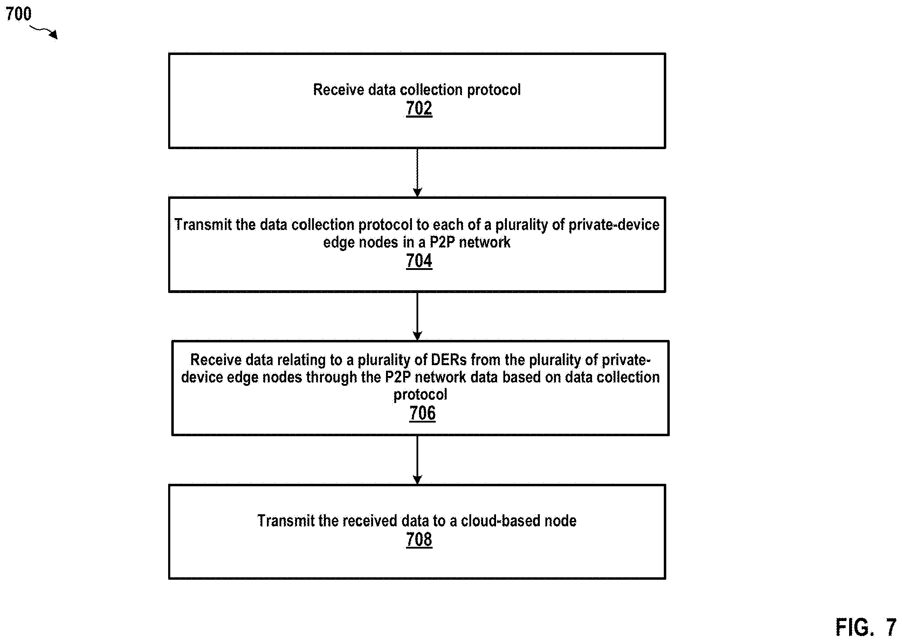

FIG. 7 is a flow diagram 700 illustrating a method for a super edge node to facilitate DER data collection. The method may be performed by a super edge node (e.g., super edge node 324, 420, or 520). At 702, the super edge node may receive a data collection protocol from a cloud. The data collection protocol may indicate a set of data types to collect and a sampling value indicating an amount of data associated with the set of data types to transmit. The indicated data types and sampling value may represent less than all data available at the DER (e.g., a subset of the data types of available at the DER and a subset of the data points available at the DER). In some aspects, the data protocol may be based on previously-received DER data that has been processed at the cloud to determine an updated data protocol (e.g., identify additional data that may be useful or identify data that will no longer be collected). For example, referring to FIG. 4, the super edge node 420 may receive a data collection protocol (e.g., a data inventory) from the cloud 440.

At 704, the super edge node may transmit the data collection protocol to each of multiple private-device edge nodes (e.g., privately-owned mobile devices) in a peer-to-peer network. In some aspects, the transmitted data protocol may be a data protocol based on the data protocol received at 702 that has been formatted or generated for a specific DER to which a private-device edge node of the private-device edge nodes connect. As discussed above, the transmitted data collection protocol may indicate a set of data types to collect and a sampling value indicating an amount of data associated with the set of data types to transmit. The super edge node may also transmit the data collection protocol to each of a set of DERs in the peer-to-peer network. For example, referring to FIG. 4, the super edge node 420 may use DER control component 425 to generate and transmit a data collection protocol (via edge node/DER interface 422 and an edge node 430) to a DER 410.

Based on the data collection protocol, the super edge node may receive, at 706, data relating to the multiple DERs from the multiple private-device edge nodes through the peer-to-peer network. The data relating to the multiple DERs may be data encrypted by the DER before transmitting the DER data to a private-device edge node (and eventually the super edge node). The data relating to the multiple DERs may include time series data relating to the data types indicated by the data collection protocol sampled at the rate indicated by the data collection protocol. The super edge node may also receive, data relating to the set of DERs from the set of DERs through the peer-to-peer network. The data received from the set of DERs may be encrypted or unencrypted based on the nature of the connection between a DER and the super edge node (e.g., whether it is secure or unsecure). In some aspects, the super edge node may aggregate the received data from the multiple private-device edge nodes into a first aggregated data set. Aggregating the received data, in some aspects, includes a deduplication operation to remove duplicate data relating to a same DER received from more than one private-device edge node. For example, referring to FIG. 4, the super edge node may receive DER data from edge nodes 430 (and from DERs 410).

Finally, at 708, the super edge node may transmit the received data to a cloud-based node. The data may be transmitted, at 708, via a secure link between the super edge node and the cloud. For example, referring to FIG. 4, super edge node 420 may transmit DER data to the cloud 440 via cloud interface 421 and peer-to-peer network interface 441.

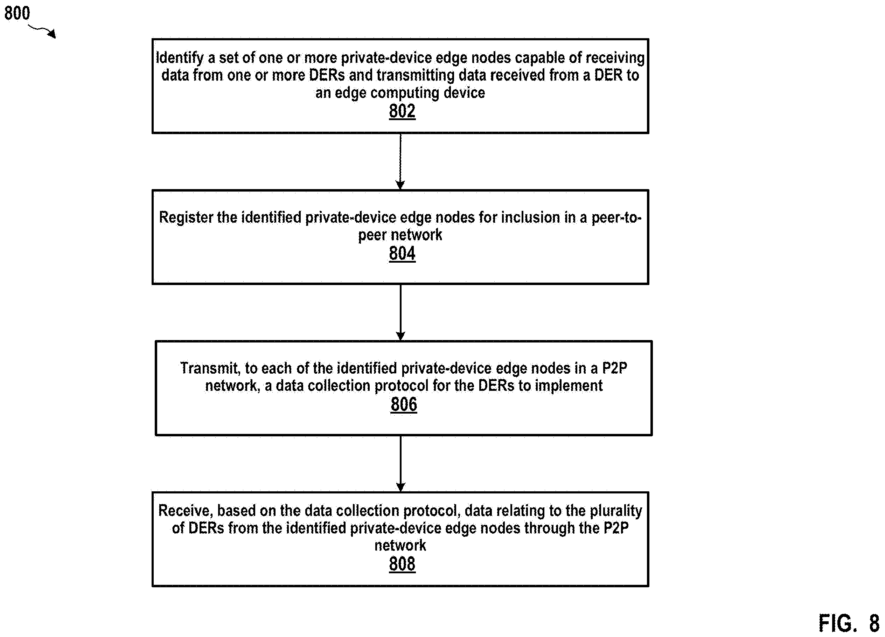

FIG. 8 is a flow diagram 800 illustrating a method for a super edge node to recruit privately-owned devices to facilitate DER data collection. The method may be performed by a super edge node (e.g., super edge node 324, 420, or 520). At 802, the super edge node may identify a set of one or more private-device edge nodes capable of (1) receiving data from one or more DERs and (2) transmitting data received from a DER to the edge computing device. In some aspects, the super edge node may identify the set of one or more private-device edge nodes based on a proximity of the set of private-device edge nodes to a super edge node and/or a DER. The identification, at 802, may be based on the presence of a particular application on the set of private-device edge nodes. For example, referring to FIG. 4, the super edge node 420 may identify the set of one or more edge nodes 430 (e.g., private-device edge nodes) to participate in the peer-to-peer network using mobile device registration component 427.

At 804, the super edge node may register the identified private-device edge nodes for inclusion in a peer-to-peer network. Registering the identified private-device edge nodes, in some aspects, includes associating the private-device edge nodes with an account (e.g., either an existing account or by creating a new account). In some aspects, the registration also includes verifying that the private-device edge nodes are valid devices for inclusion in the peer-to-peer network. For example, referring to FIG. 4, the super edge node 420 may register the set of one or more edge nodes 430 (e.g., private-device edge nodes) to participate in the peer-to-peer network using mobile device registration component 427.

At 806, the super edge node may transmit, to each of the registered private-device edge nodes in a peer-to-peer network, a data collection protocol for the DERs to implement. In some aspects, the transmitted data protocol may be a data protocol based on a data protocol received from the cloud that has been formatted or generated for a specific DER to which a private-device edge node of the private-device edge nodes connect. The data collection protocol may indicate a set of data types to collect and a sampling value indicating an amount of data associated with the set of data types to transmit. The super edge node may also transmit the data collection protocol to each of a set of DERs in the peer-to-peer network. For example, referring to FIG. 4, the super edge node 420 may use DER control component 425 to generate and transmit a data collection protocol (via edge node/DER interface 422 and an edge node 430).

Finally, at 808, the super edge node may receive data relating to the multiple DERs from the multiple private-device edge nodes through the peer-to-peer network based on the data collection protocol. The data relating to the multiple DERs may be data encrypted by the DER before transmitting the DER data to a private-device edge node (and eventually the super edge node). The data relating to the multiple DERs may include time series data relating to the data types indicated by the data collection protocol sampled at the rate indicated by the data collection protocol. The super edge node may also receive, data relating to the set of DERs from the set of DERs through the peer-to-peer network. The data received from the set of DERs may be encrypted or unencrypted based on the nature of the connection between a DER and the super edge node (e.g., whether it is secure or unsecure). In some aspects, the super edge node may aggregate the received data from the multiple private-device edge nodes into a first aggregated data set. Aggregating the received data, in some aspects, includes a deduplication operation to remove duplicate data relating to a same DER received from more than one private-device edge node. For example, referring to FIG. 4, the super edge node may receive DER data from edge nodes 430 (and from DERs 410).

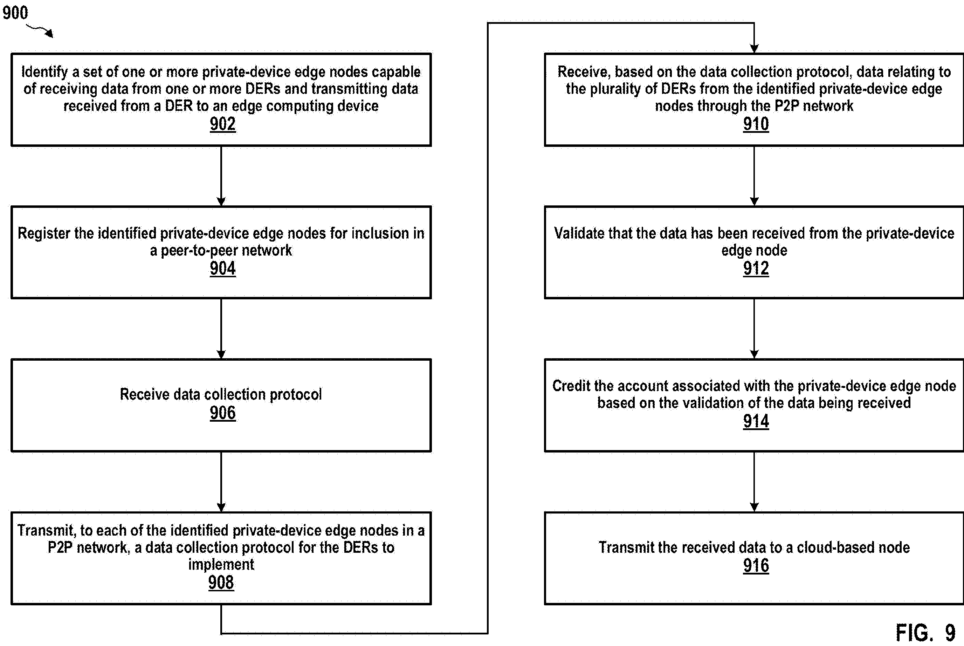

FIG. 9 is a flow diagram 900 illustrating a method for a super edge node to recruit privately-owned devices to facilitate DER data collection. The method may be performed by a super edge node (e.g., super edge node 324, 420, or 520). At 902, the super edge node may identify a set of one or more private-device edge nodes capable of (1) receiving data from one or more DERs and (2) transmitting data received from a DER to an edge computing device (e.g., the super edge node). In some aspects, the super edge node may identify the set of one or more private-device edge nodes based on a proximity of the set of private-device edge nodes to a super edge node and/or a DER. The identification, at 902, may be based on the presence of a particular application on the set of private-device edge nodes. For example, referring to FIG. 4, the super edge node 420 may identify the set of one or more edge nodes 430 (e.g., private-device edge nodes) to participate in the peer-to-peer network using mobile device registration component 427.

At 904, the super edge node may register the identified private-device edge nodes for inclusion in a peer-to-peer network. Registering the identified private-device edge nodes, in some aspects, includes associating the private-device edge nodes with an account (e.g., either an existing account or by creating a new account). In some aspects, the registration also includes verifying that the private-device edge nodes are valid devices for inclusion in the peer-to-peer network. For example, referring to FIG. 4, the super edge node 420 may register the set of one or more edge nodes 430 (e.g., private-device edge nodes) to participate in the peer-to-peer network using mobile device registration component 427.

At 906, the super edge node may receive a data collection protocol from a cloud. The data collection protocol may indicate a set of data types to collect and a sampling value indicating an amount of data associated with the set of data types to transmit. The indicated data types and sampling value may represent less than all data available at the DER (e.g., a subset of the data types of available at the DER and a subset of the data points available at the DER). In some aspects, the data protocol may be based on previously-received DER data that has been processed at the cloud to determine an updated data protocol (e.g., identify additional data that may be useful or identify data that will no longer be collected). For example, referring to FIG. 4, the super edge node 420 may receive a data collection protocol (e.g., a data inventory) from the cloud 440.

At 908, the super edge node may transmit, to each of the registered private-device edge nodes in a peer-to-peer network, a data collection protocol for the DERs to implement. In some aspects, the transmitted data protocol may be a data protocol based on the data protocol received from the cloud that has been formatted or generated for a specific DER to which a private-device edge node of the private-device edge nodes connect. The super edge node may also transmit the data collection protocol to each of a set of DERs in the peer-to-peer network. For example, referring to FIG. 4, the super edge node 420 may use DER control component 425 to generate and transmit a data collection protocol (via edge node/DER interface 422 and/or an edge node 430).

The super edge node may receive, at 910, data relating to the multiple DERs from the multiple private-device edge nodes through the peer-to-peer network based on the data collection protocol. The data relating to the multiple DERs may be data encrypted by the DER before the DER data is transmitted to a private-device edge node (and eventually the super edge node). The data relating to the multiple DERs may include time series data relating to the data types indicated by the data collection protocol sampled at the rate indicated by the data collection protocol. The super edge node may also receive data relating to the set of DERs from the set of DERs through the peer-to-peer network. The data received from the set of DERs may be encrypted or unencrypted based on the nature of the connection between a DER and the super edge node (e.g., whether it is secure or not secure). In some aspects, the super edge node may aggregate the received data from the multiple private-device edge nodes into a first aggregated data set. Aggregating the received data, in some aspects, includes a deduplication operation to remove duplicate data relating to a same DER received from more than one private-device edge node. For example, referring to FIG. 4, the super edge node may receive DER data from edge nodes 430 (and from DERs 410).

At 912, the super edge node may validate that the data has been received from the private-device edge node. In some aspects, validating that the data has been received at 912 also includes validating the data that has been received such that the data received from the private-device edge node is validated if the data is correct (or decodable). In some aspects, validating the data includes validating an encryption used by the DER. For example, referring to FIG. 4, the super edge node 420 may validate that the data has been received using the mobile device registration component 427.

At 914, the super edge node may credit the account associated with the private-device edge node based on the validation of the data being received. The credits may be assigned based on one or more of an amount of data received from the private-device edge node associated with an account, a time that the private-device edge node associated with the account participates in the peer-to-peer network, and/or on the amount of resources dedicated to the mobile application on the private-device edge node associated with the account. For example, referring to FIG. 4, the super edge node 420 may credit an account associated with an edge node 430 after validating that the data has been received using the mobile device registration component 427.

Finally, at 916, the super edge node may transmit the received data to a cloud-based node. The data may be transmitted, at 916, via a secure link between the super edge node and the cloud. For example, referring to FIG. 4, super edge node 420 may transmit DER data to the cloud 440 via cloud interface 421 and peer-to-peer network interface 441.

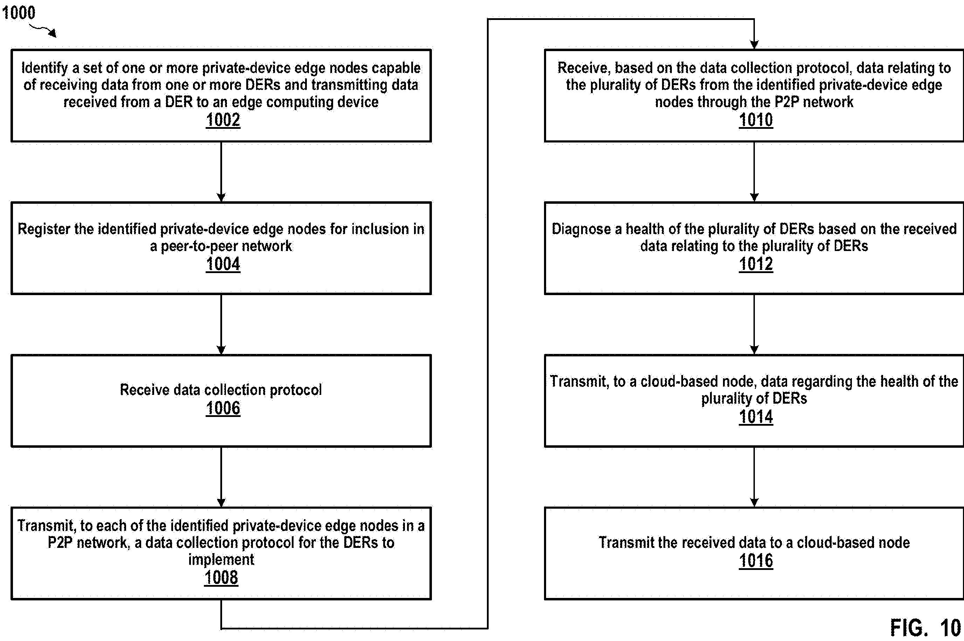

FIG. 10 is a flow diagram 1000 illustrating a method for a super edge node to recruit privately-owned devices to facilitate DER data collection. The method may be performed by a super edge node (e.g., super edge node 324, 420, or 520). At 1002, the super edge node may identify a set of one or more private-device edge nodes capable of (1) receiving data from one or more DERs and (2) transmitting data received from a DER to the edge computing device. In some aspects, the super edge node may identify the set of one or more private-device edge nodes based on a proximity of the set of private-device edge nodes to a super edge node and/or a DER. The identification, at 1002, may be based on the presence of a particular application on the set of private-device edge nodes. For example, referring to FIG. 4, the super edge node 420 may identify the set of one or more edge nodes 430 (e.g., private-device edge nodes) to participate in the peer-to-peer network using mobile device registration component 427.

At 1004, the super edge node may register the identified private-device edge nodes for inclusion in a peer-to-peer network. Registering the identified private-device edge nodes, in some aspects, includes associating the private-device edge nodes with an account (e.g., either an existing account or by creating a new account). In some aspects, the registration also includes verifying that the private-device edge nodes are valid devices for inclusion in the peer-to-peer network. For example, referring to FIG. 4, the super edge node 420 may register the set of one or more edge nodes 430 (e.g., private-device edge nodes) to participate in the peer-to-peer network using mobile device registration component 427.

At 1006, the super edge node may receive a data collection protocol from a cloud. The data collection protocol may indicate a set of data types to collect and a sampling value indicating an amount of data associated with the set of data types to transmit. The indicated data types and sampling value may represent less than all data available at the DER (e.g., a subset of the data types of available at the DER and a subset of the data points available at the DER). In some aspects, the data protocol may be based on previously-received DER data that has been processed at the cloud to determine an updated data protocol (e.g., identify additional data that may be useful or identify data that will no longer be collected). For example, referring to FIG. 4, the super edge node 420 may receive a data collection protocol (e.g., a data inventory) from the cloud 440.

At 1008, the super edge node may transmit, to each of the registered private-device edge nodes in a peer-to-peer network, a data collection protocol for the DERs to implement. In some aspects, the transmitted data protocol may be a data protocol based on the data protocol received from the cloud that has been formatted or generated for a specific DER to which a private-device edge node of the private-device edge nodes connect. The super edge node may also transmit the data collection protocol to each of a set of DERs in the peer-to-peer network. For example, referring to FIG. 4, the super edge node 420 may use DER control component 425 to generate and transmit a data collection protocol (via edge node/DER interface 422 and/or an edge node 430).

The super edge node may receive, at 1010, data relating to the multiple DERs from the multiple private-device edge nodes through the peer-to-peer network based on the data collection protocol. The data relating to the multiple DERs may be data encrypted by the DER before the DER data is transmitted to a private-device edge node (and eventually the super edge node). The data relating to the multiple DERs may include time series data relating to the data types indicated by the data collection protocol sampled at the rate indicated by the data collection protocol. The super edge node may also receive data relating to the state of the DERs from which it receives data. In some aspects, the super edge node may aggregate the received data from the multiple private-device edge nodes into a first aggregated data set. Aggregating the received data, in some aspects, includes a deduplication operation to remove duplicate data relating to a same DER received from more than one private-device edge node. For example, referring to FIG. 4, the super edge node may receive DER data from edge nodes 430 (and from DERs 410).

At 1012, the super edge node may diagnose a state of the multiple DERs based on the received data relating to the multiple DERs. Diagnosing the state of the multiple DERs may include diagnosing whether the DERs are active or in a failed state (or in a disconnected state). For example, referring to FIG. 4, the super edge node may diagnose the state of DERs 410 (e.g., using data processing component 424).

At 1014, the super edge node may transmit, to the cloud-based node, data regarding the health of the multiple DERs. Finally, at 1016, the super edge node may transmit the received data to a cloud-based node. The data regarding the health of the multiple DERs and the DER data may be transmitted, at 1016, via a secure link between the super edge node and the cloud. For example, referring to FIG. 4, super edge node 420 may transmit the data regarding the health of the multiple DERs and the DER data to the cloud 440 via cloud interface 421 and peer-to-peer network interface 441.

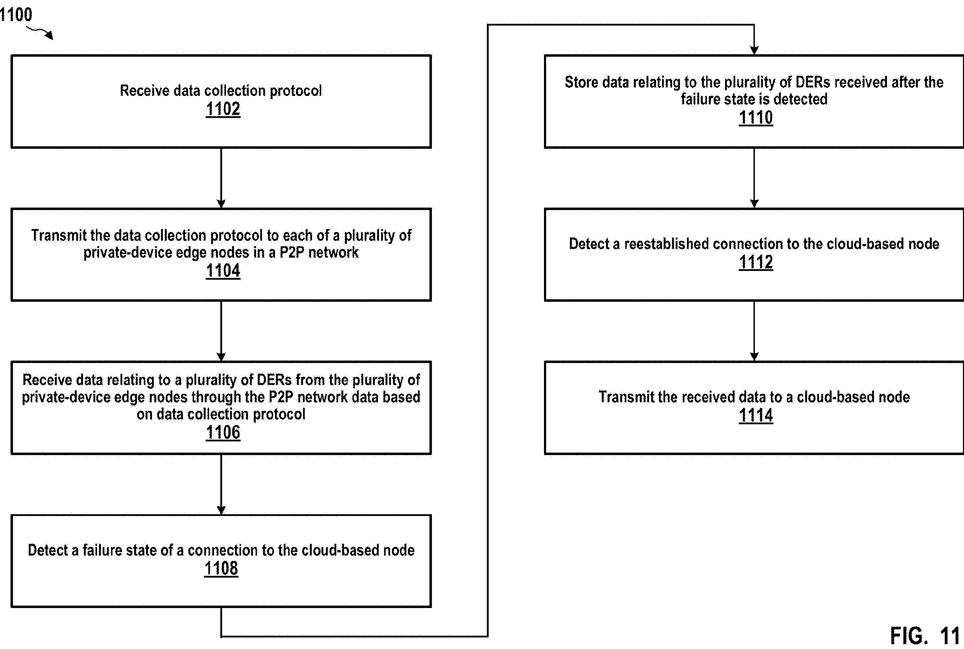

FIG. 11 is a flow diagram 1100 illustrating a method for a super edge node to facilitate DER data collection. The method may be performed by a super edge node (e.g., super edge node 324, 420, or 520). At 1102, the super edge node may receive a data collection protocol from a cloud. The data collection protocol may indicate a set of data types to collect and a sampling value indicating an amount of data associated with the set of data types to transmit. The indicated data types and sampling value may represent less than all data available at the DER (e.g., a subset of the data types of available at the DER and a subset of the data points available at the DER). In some aspects, the data protocol may be based on previously-received DER data that has been processed at the cloud to determine an updated data protocol (e.g., identify additional data that may be useful or identify data that will no longer be collected). For example, referring to FIG. 4, the super edge node 420 may receive a data collection protocol (e.g., a data inventory) from the cloud 440.

At 1104, the super edge node may transmit the data collection protocol to each of multiple private-device edge nodes (e.g., privately-owned mobile devices) in a peer-to-peer network. In some aspects, the transmitted data protocol may be a data protocol based on the data protocol received at 1102 that has been formatted or generated for a specific DER to which a private-device edge node of the private-device edge nodes connect. As discussed above, the transmitted data collection protocol may indicate a set of data types to collect and a sampling value indicating an amount of data associated with the set of data types to transmit. The super edge node may also transmit the data collection protocol to each of a set of DERs in the peer-to-peer network. For example, referring to FIG. 4, the super edge node 420 may use DER control component 425 to generate and transmit a data collection protocol (via edge node/DER interface 422 and/or an edge node 430).

Based on the data collection protocol, the super edge node may receive, at 1106, data relating to the multiple DERs from the multiple private-device edge nodes through the peer-to-peer network. The data relating to the multiple DERs may be data encrypted by the DER before transmitting the DER data to a private-device edge node (and eventually the super edge node). The data relating to the multiple DERs may include time series data relating to the data types indicated by the data collection protocol sampled at the rate indicated by the data collection protocol. The super edge node may also receive, data relating to the set of DERs from the set of DERs through the peer-to-peer network. The data received from the set of DERs may be encrypted or unencrypted based on the nature of the connection between a DER and the super edge node (e.g., whether it is secure or unsecure). In some aspects, the super edge node may aggregate the received data from the multiple private-device edge nodes into a first aggregated data set. Aggregating the received data, in some aspects, includes a deduplication operation to remove duplicate data relating to a same DER received from more than one private-device edge node. For example, referring to FIG. 4, the super edge node may receive DER data from edge nodes 430 (and from DERs 410).

At 1108, the super edge node may detect a failure state of a connection to the cloud-based node. The failure state may be due to an intermediate link failure (e.g., an intermediate router failure). For example, referring to FIG. 4, the super edge node 420 (e.g., using the cloud interface 421) may identify that a link to the cloud 440 (e.g., the peer-to-peer network interface 441) has failed.

Based on detecting the failure state of the connection, the super edge node may store, at 1110, data relating to the multiple DERs received after the failure state is detected. The super edge node may store the received data in a local storage for eventual transmission to the cloud. For example, referring to FIG. 4, the super edge node 420 may store data received from DERs (e.g., via edge nodes 430) in a local storage 423 for eventual transmission to the cloud.

At 1112, the super edge node may detect a reestablished connection to the cloud-based node. Finally, at 1114, the super edge node may transmit the received and stored data to the cloud-based node. The data may be transmitted, at 1114, via a reestablished secure link between the super edge node and the cloud. For example, referring to FIG. 4, super edge node 420 may transmit DER data stored in local storage 423to the cloud 440 via cloud interface 421 and peer-to-peer network interface 441.

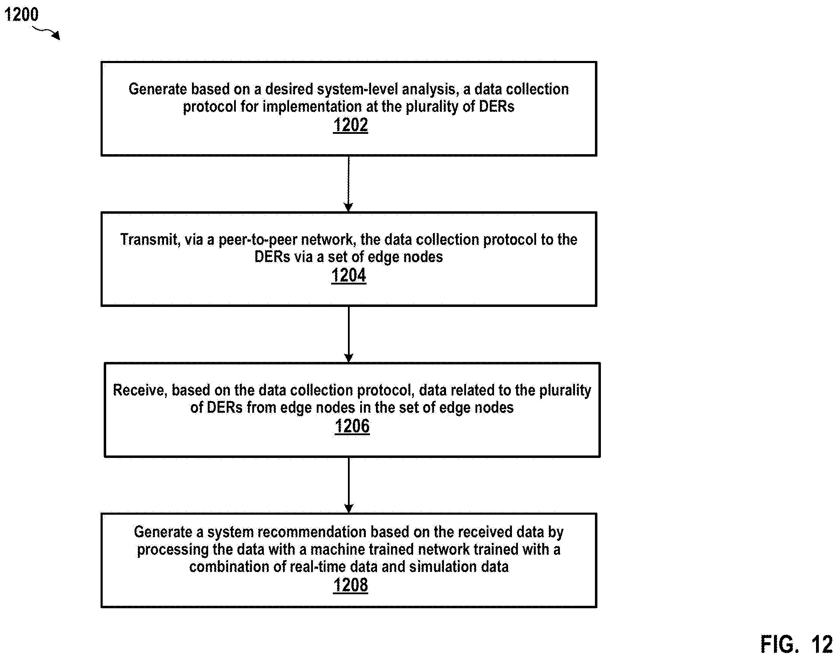

FIG. 12 is a flow diagram 1200 illustrating a method for a cloud program to facilitate DER data collection and system control. The method may be performed by a cloud (e.g., a cloud 310, 440, or 540) or by software in the cloud. At 1202, the cloud may generate, based on a desired system-level analysis, a data collection protocol for implementation at the multiple DERs. The data collection protocol may be based on an analysis of previously received DER data. In some aspects, the data collection protocol may indicate a set of data types to collect and a sampling value indicating an amount of data associated with the set of data types to transmit. The indicated data types and sampling value may represent less than all data available at the DER (e.g., a subset of the data types of available at the DER and a subset of the data points available at the DER). For example, referring to FIG. 4, the cloud 440 may generate a data collection protocol for transmission to the DERs 410 via super edge node 420 or edge nodes 430.

At 1204, the cloud may transmit, via a peer-to-peer network, the data collection protocol to the DERs via a set of edge nodes. The set of edge nodes may include at least one master (super) edge node and multiple private-device edge nodes. For example, referring to FIG. 4, the cloud 440 may transmit the data collection protocol to super edge nodes 420 (e.g., master edge nodes)and edge nodes 430 for transmission to the DERs 410.

At 1206, the cloud may receive, based on the data collection protocol, data related to the multiple DERs from edge nodes in the set of edge nodes. The data related to the multiple DERs may include data based on the data collection protocol and data regarding the health of elements of the system (e.g., DERs, nodes of the peer-to-peer network, etc.). For example, referring to FIG. 4, the cloud 440 may receive data related to the multiple DERs 410 from super edge nodes 420 and/or edge node 430.

Finally, at 1208, the cloud may generate a system recommendation based on the received data by processing the data with a machine trained network. The machine trained network may have been trained with a combination of real-time data and simulation data. The system recommendation may include a recommendation for control information and an updated data collection protocol based on the analysis of the received DER data. For example, referring to FIG. 4, the cloud 440 may analyze received DER data related to the multiple DERs 410 using the deep learning component 445, the model solver component 444, and the co-simulation module 455.

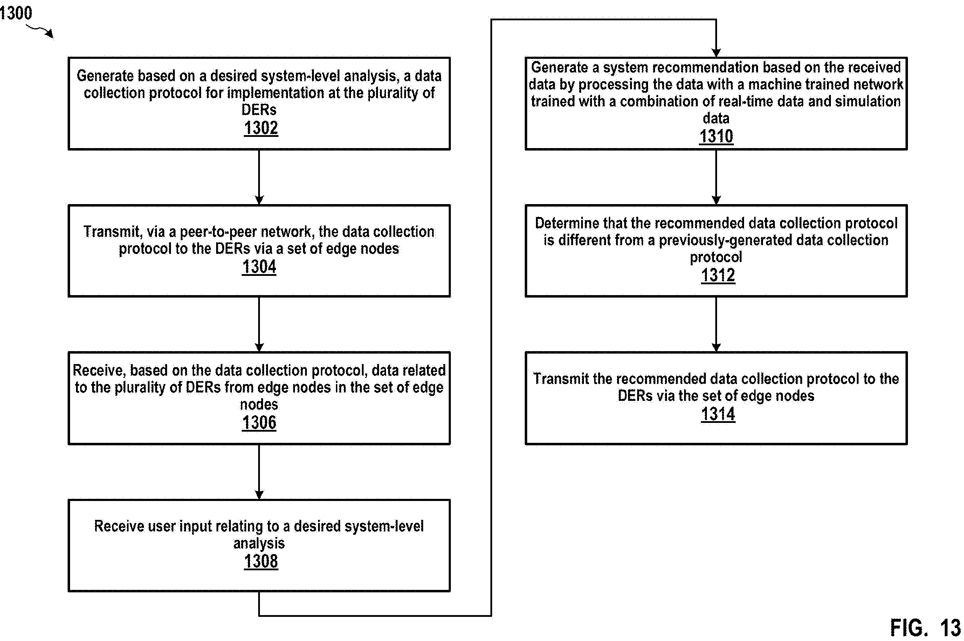

FIG. 13 is a flow diagram 1300 illustrating a method for a cloud program to facilitate DER data collection and system control. The method may be performed by a cloud (e.g., a cloud 310, 440, or 540) or by software in the cloud. At 1302, the cloud may generate, based on a desired system-level analysis, a data collection protocol for implementation at the multiple DERs. The data collection protocol may be based on an analysis of previously received DER data. In some aspects, the data collection protocol may indicate a set of data types to collect and a sampling value indicating an amount of data associated with the set of data types to transmit. The indicated data types and sampling value may represent less than all data available at the DER (e.g., a subset of the data types of available at the DER and a subset of the data points available at the DER). For example, referring to FIG. 4, the cloud 440 may generate a data collection protocol for transmission to the DERs 410 via super edge node 420 or edge nodes 430.

At 1304, the cloud may transmit, via a peer-to-peer network, the data collection protocol to the DERs via a set of edge nodes. The set of edge nodes may include at least one master (super) edge node and multiple private-device edge nodes. For example, referring to FIG. 4, the cloud 440 may transmit the data collection protocol to super edge nodes 420 (e.g., master edge nodes) and edge nodes 430 for transmission to the DERs 410.

At 1306, the cloud may receive, based on the data collection protocol, data related to the multiple DERs from edge nodes in the set of edge nodes. The data related to the multiple DERs may include data based on the data collection protocol and data regarding the health of elements of the system (e.g., DERs, nodes of the peer-to-peer network, etc.). For example, referring to FIG. 4, the cloud 440 may receive data related to the multiple DERs 410 from super edge nodes 420 and/or edge node 430.

At 1308, the cloud may receive user input relating to a desired system-level analysis. The user input may specify a set of system characteristics that are of interest to a user (e.g., a system administrator). The characteristics, in some aspects, may include power output, current load, or other information. For example, referring to FIG. 4, the cloud 440 may receive user input via user interface 453.

At 1310, the cloud may generate a system recommendation based on the received data by processing the data with a machine trained network. The machine trained network may have been trained with a combination of real-time data and simulation data. The system recommendation may include a recommendation for control information and an updated data collection protocol based on the analysis of the received DER data. In some aspects, the updated data collection protocol may be based on the user input received at 1308. For example, referring to FIG. 4, the cloud 440 may receive user input via user interface 453, and analyze received DER data related to the multiple DERs 410 using the deep learning component 445, the model solver component 444, and the co-simulation module 455.

At 1312, the cloud may determine that the recommended data collection protocol is different from a previously-generated data collection protocol. The updated data protocol may be generated for future data acquisition to define a dynamic and adaptive data acquisition method. The updated data collection protocol may identify additional data that may be useful or identify data that will no longer be collected. For example, referring to FIG. 4, the cloud 440 may determine using control component 457 that the recommended data collection protocol is different from a previously-generated data collection protocol.

Finally, at 1314, the cloud may transmit the recommended data collection protocol to the DERs via the set of edge nodes. The data may be transmitted, at 1314, via a secure link between the cloud and the super edge node. For example, referring to FIG. 4, cloud 440 may transmit an updated data collection protocol to the super edge node 420 via peer-to-peer network interface 441 and cloud interface 421.

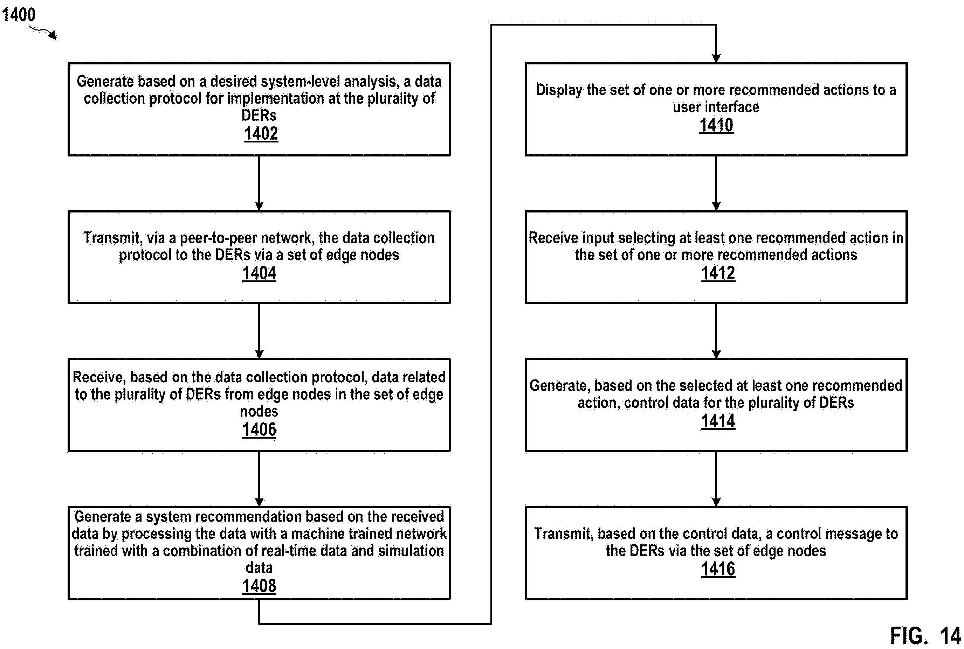

FIG. 14 is a flow diagram 1400 illustrating a method for a cloud program to facilitate DER data collection and system control. The method may be performed by a cloud (e.g., a cloud 310, 440, or 540) or by software in the cloud. At 1402, the cloud may generate, based on a desired system-level analysis, a data collection protocol for implementation at the multiple DERs. The data collection protocol may be based on an analysis of previously received DER data. In some aspects, the data collection protocol may indicate a set of data types to collect and a sampling value indicating an amount of data associated with the set of data types to transmit. The indicated data types and sampling value may represent less than all data available at the DER (e.g., a subset of the data types of available at the DER and a subset of the data points available at the DER). For example, referring to FIG. 4, the cloud 440 may generate a data collection protocol for transmission to the DERs 410 via super edge node 420 or edge nodes 430.

At 1404, the cloud may transmit, via a peer-to-peer network, the data collection protocol to the DERs via a set of edge nodes. The set of edge nodes may include at least one master (super) edge node and multiple private-device edge nodes. For example, referring to FIG. 4, the cloud 440 may transmit the data collection protocol to super edge nodes 420 (e.g., master edge nodes) and edge nodes 430 for transmission to the DERs 410.

At 1406, the cloud may receive, based on the data collection protocol, data related to the multiple DERs from edge nodes in the set of edge nodes. The data related to the multiple DERs may include data based on the data collection protocol and data regarding the health of elements of the system (e.g., DERs, nodes of the peer-to-peer network, etc.). For example, referring to FIG. 4, the cloud 440 may receive data related to the multiple DERs 410 from super edge nodes 420 and/or edge node 430.

At 1408, the cloud may generate a system recommendation based on the received data by processing the data with a machine trained network. The machine trained network may have been trained with a combination of real-time data and simulation data. The system recommendation may include a recommendation for control information and an updated data collection protocol based on the analysis of the received DER data. For example, referring to FIG. 4, the cloud 440 may analyze received DER data related to the multiple DERs 410 using the deep learning component 445, the model solver component 444, and the co-simulation module 455.

At 1410, the cloud may display the set of one or more recommended actions to a user interface. The display may include a visual depiction of the state of the system along with relevant statistical data and a set of recommendations based on the DER data. The visual depiction of the state of the system along with relevant statistical data may be presented to a user to inform a decision in light of a set of recommended actions. For example, referring to FIG. 4, the cloud 440 may display the set of one or more recommended actions via recommendation component 451 and/or user interface 453.

At 1412, the cloud may receive input selecting at least one recommended action in the set of one or more recommended actions. The set of recommendations, in some aspects, may be reviewed by a user, e.g., a grid operator, and the received input may then be used to define a finalized control action/command. For example, the input (e.g., from a user or system administrator) may include a selection of a recommended action or a selection indicating a different action. The user input and/or the finalized control action/command may then be provided to a control component. For example, referring to FIG. 4, the cloud 440 may receive user input via user interface 453 and provide the user input to a control component 457.

At 1414, the cloud may generate, based on the selected at least one recommended action, control data for the multiple DERs. The control message, in some aspects, may indicate an operating mode for the DER in a set of operating modes. The set of operating modes may include a constant voltage operating mode and a constant power operating mode. In some aspects, the control message may indicate a reference value related to a characteristic of the at least one DER. The reference value may be related to one of a voltage magnitude, a power factor, and a reactive power operating point. For example, referring to FIG. 4, the cloud 440 may generate the control data using control component 457.

Finally, at 1416, the cloud may transmit a control message to the DERs via the set of edge nodes based on the control data. The control message may be transmitted, at 1416, via a secure link between the cloud and the super edge node. For example, referring to FIG. 4, cloud 440 may transmit a control message to the super edge node 420 via peer-to-peer network interface 441 and cloud interface 421.

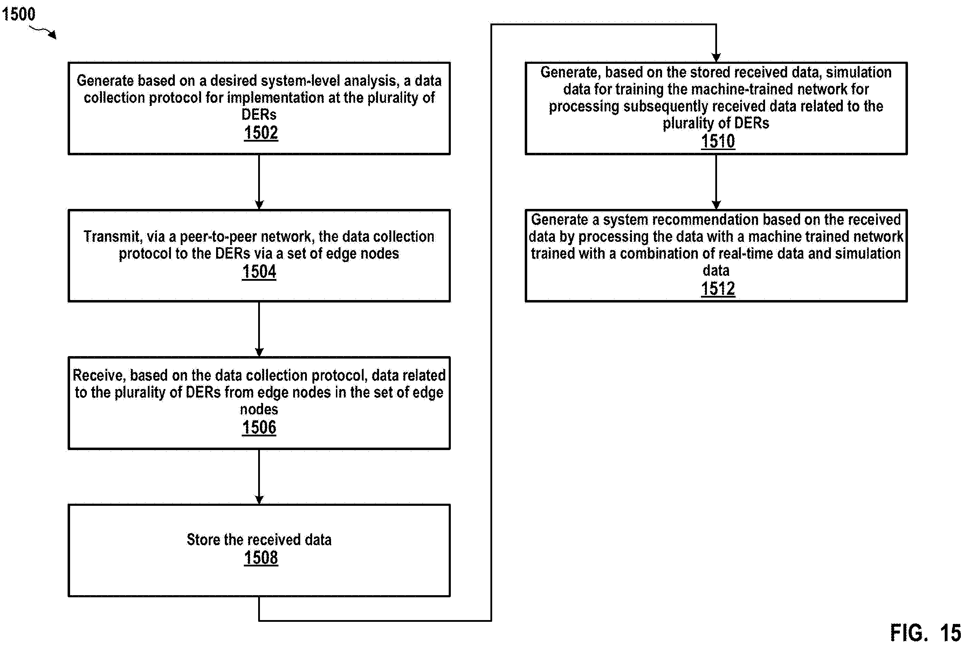

FIG. 15 is a flow diagram 1500 illustrating a method for a cloud program to facilitate DER data collection and system control. The method may be performed by a cloud (e.g., a cloud 310, 440, or 540) or by software in the cloud. At 1502, the cloud may generate, based on a desired system-level analysis, a data collection protocol for implementation at the multiple DERs. The data collection protocol may be based on an analysis of previously received DER data. In some aspects, the data collection protocol may indicate a set of data types to collect and a sampling value indicating an amount of data associated with the set of data types to transmit. The indicated data types and sampling value may represent less than all data available at the DER (e.g., a subset of the data types of available at the DER and a subset of the data points available at the DER). For example, referring to FIG. 4, the cloud 440 may generate a data collection protocol for transmission to the DERs 410 via super edge node 420 or edge nodes 430.

At 1504, the cloud may transmit, via a peer-to-peer network, the data collection protocol to the DERs via a set of edge nodes. The set of edge nodes may include at least one master (super) edge node and multiple private-device edge nodes. For example, referring to FIG. 4, the cloud 440 may transmit the data collection protocol to super edge nodes 420 (e.g., master edge nodes) and edge nodes 430 for transmission to the DERs 410.

At 1506, the cloud may receive, based on the data collection protocol, data related to the multiple DERs from edge nodes in the set of edge nodes. The data related to the multiple DERs may include data based on the data collection protocol and data regarding the health of elements of the system (e.g., DERs, nodes of the peer-to-peer network, etc.). For example, referring to FIG. 4, the cloud 440 may receive data related to the multiple DERs 410 from super edge nodes 420 and/or edge node 430.

At 1508, the cloud may store the received data. The received data may be stored as time series data. The stored data may be stored in the cloud for long-term storage for offline data analysis. For example, referring to FIG. 4, the cloud 440 may store received data in a data storage 447.

At 1510, the cloud may generate, based on the stored received data, simulation data for training the machine-trained network for processing subsequently-received data related to the multiple DERs. The machine-trained network may be one of a neural network, a convolutional neural network, or other artificial intelligence network as may be appropriate. The simulation data, in some aspects, is generated by a model solver based on physical models of the system and the stored data. In some aspects, the simulation data may be used to train the machine-trained network for processing the current data as well as subsequently-received data. For example, referring to FIG. 4, the cloud 440 may provide the received data from either the data processing component 443 and/or from data storage 447 to a model solver component 444 that may generate simulation data for training deep learning component 445.

Finally, at 1512, the cloud may generate a system recommendation based on the received data by processing the data with a machine-trained network. The machine-trained network may have been trained with a combination of real-time data and simulation data, such as the simulation data generated at 1510. The system recommendation may include a recommendation for control information and an updated data collection protocol based on the analysis of the received DER data. For example, referring to FIG. 4, the cloud 440 may analyze received DER data related to the multiple DERs 410 using the deep learning component 445, the model solver component 444, and the co-simulation module 455.

As described above, the system described above may address the challenge of the integration cost of incorporating massive amount of machine data from DERs for distribution grid operation. For example, in some aspects, the system may incorporate privately-owned mobile devices to provide access to local DER data, a set of super (or master) edge nodes for providing a first level of aggregation, and a cloud-based system (e.g., software) for incorporating (e.g., aggregating and analyzing) the massive amount of machine data from the DERs.

Additionally, the system described above may address the challenge of coordinating DER operation and leveraging DER capacities for grid operation and new edge services based on the DER data. For example, the cloud-based system may analyze the massive amount of DER data and provide control messages for controlling the DERs to leverage DER capacities for grid operation. This cloud-based control system may also address a lack of resilience of a current grid design. For example, many distribution circuits are radial networks and rely on a substation as the sole energy source and when there is a natural disaster or outage that takes down the utility grid, the downstream customers may run out of power. The cloud-based control system described above may allow DERs to bridge the gap and greatly enhance the resilience and flexibility of grids in the face of failures. Accordingly, utilizing the peer-to-peer network incorporating privately-owned mobile devices providing DER data to a cloud-based control system may provide fault tolerance and avoid a single point of failure for the electrical grid.

The system described above may further provide affordable field infrastructure to allow two-way communication with scattered DERs, ranging over large scale geographical landscapes and with massive amount of data being produced by behind the meter DERs. The communication between the system infrastructure with DERs describe above may be flexible, future proof, and flexible with no single-point of failure. As described above, data acquisition in the cloud-based control system may be flexible and allow a change of a data schema based on analytical needs. The cloud-based control system may also avoid redundant data been transmitted to the cloud and the on-demand data acquisition may reduce overall data volume and throughput.

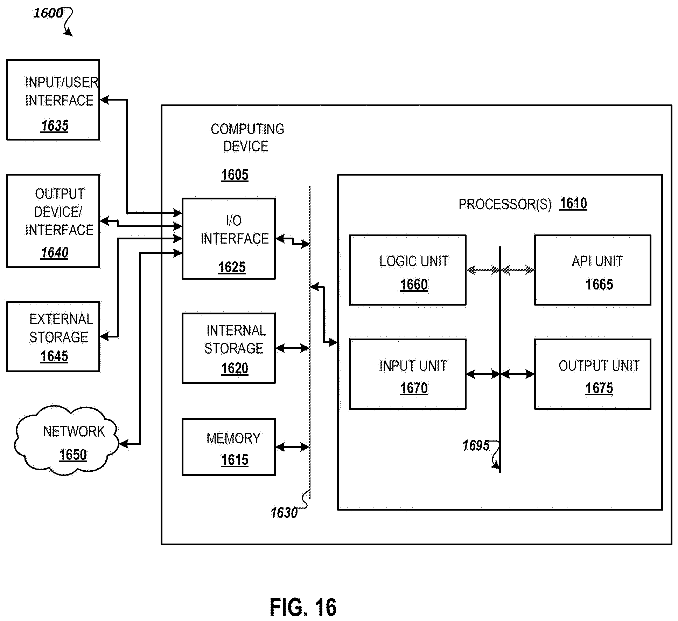

FIG. 16 illustrates an example computing environment with an example computer device suitable for use in some example implementations, such as a computing resource management server 10 configured to execute and facilitate the example implementations described herein. Computer device 1605 in computing environment 1600 can include one or more processing units, cores, or processors 1610, memory 1615 (e.g., RAM, ROM, and/or the like), internal storage 1620 (e.g., magnetic, optical, solid-state storage, and/or organic), and/or IO interface 1625, any of which can be coupled on a communication mechanism or bus 1630 for communicating information or embedded in the computer device 1605. IO interface 1625 is also configured to receive images from cameras or provide images to projectors or displays, depending on the desired implementation.

Computer device 1605 can be communicatively coupled to input/user interface 1635 and output device/interface 1640. Either one or both of the input/user interface 1635 and output device/interface 1640 can be a wired or wireless interface and can be detachable. Input/user interface 1635 may include any device, component, sensor, or interface, physical or virtual, that can be used to provide input (e.g., buttons, touch-screen interface, keyboard, a pointing/cursor control, microphone, camera, braille, motion sensor, accelerometer, optical reader, and/or the like). Output device/interface 1640 may include a display, television, monitor, printer, speaker, braille, or the like. In some example implementations, input/user interface 1635 and output device/interface 1640 can be embedded with or physically coupled to the computer device 1605. In other example implementations, other computer devices may function as or provide the functions of input/user interface 1635 and output device/interface 1640 for a computer device 1605.

Examples of computer device 1605 may include, but are not limited to, highly mobile devices (e.g., smartphones, devices in vehicles and other machines, devices carried by humans and animals, and the like), mobile devices (e.g., tablets, notebooks, laptops, personal computers, portable televisions, radios, and the like), and devices not designed for mobility (e.g., desktop computers, other computers, information kiosks, televisions with one or more processors embedded therein and/or coupled thereto, radios, and the like).

Computer device 1605 can be communicatively coupled (e.g., via IO interface 1625) to external storage 1645 and network 1650 for communicating with any number of networked components, devices, and systems, including one or more computer devices of the same or different configuration. Computer device 1605 or any connected computer device can be functioning as, providing services of, or referred to as a server, client, thin server, general machine, special-purpose machine, or another label.

IO interface 1625 can include but is not limited to, wired and/or wireless interfaces using any communication or IO protocols or standards (e.g., Ethernet, 1602. 1 1x, Universal System Bus, WiMax, modem, a cellular network protocol, and the like) for communicating information to and/or from at least all the connected components, devices, and network in computing environment 1600. Network 1650 can be any network or combination of networks (e.g., the Internet, local area network, wide area network, a telephonic network, a cellular network, satellite network, and the like).

Computer device 1605 can use and/or communicate using computer-usable or computer readable media, including transitory media and non-transitory media. Transitory media include transmission media (e.g., metal cables, fiber optics), signals, carrier waves, and the like. Non-transitory media include magnetic media (e.g., disks and tapes), optical media (e.g., CD ROM, digital video disks, Blu-ray disks), solid-state media (e.g., RAM, ROM, flash memory, solid-state storage), and other non-volatile storage or memory.

Computer device 1605 can be used to implement techniques, methods, applications, processes, or computer-executable instructions in some example computing environments. Computer-executable instructions can be retrieved from transitory media, and stored on and retrieved from non-transitory media. The executable instructions can originate from one or more of any programming, scripting, and machine languages (e.g., C, C++, C#, Java, Visual Basic, Python, Perl, JavaScript, and others).

Processor(s) 1610 can execute under any operating system (OS) (not shown), in a native or virtual environment. One or more applications can be deployed that include logic unit 1660, application programming interface (API) unit 1665, input unit 1670, output unit 1675, and inter-unit communication mechanism 1695 for the different units to communicate with each other, with the OS, and with other applications (not shown). The described units and elements can be varied in design, function, configuration, or implementation and are not limited to the descriptions provided. Processor(s) 1610 can be in the form of hardware processors such as central processing units (CPUs) or in a combination of hardware and software units.

In some example implementations, when information or an execution instruction is received by API unit 1665, it may be communicated to one or more other units (e.g., logic unit 1660, input unit 1670, output unit 1675). In some instances, logic unit 1660 may be configured to control the information flow among the units and direct the services provided by API unit 1665, the input unit 1670, the output unit 1675, in some example implementations described above. For example, the flow of one or more processes or implementations may be controlled by logic unit 1660 alone or in conjunction with API unit 1665. The input unit 1670 may be configured to obtain input for the calculations described in the example implementations, and the output unit 1675 may be configured to provide an output based on the calculations described in example implementations.

Processor(s) 1610 can be configured to receive, from a cloud node, a data collection protocol. The processor(s) 1610 may also be configured to transmit the data collection protocol to each of a plurality of private-device edge nodes (e.g., a privately-owned mobile devices) in a peer-to-peer network and receive, based on the data collection protocol, data relating to the plurality of DERs from the plurality of private-device edge nodes through the peer-to-peer network. The processor(s) 1610 may further be configured to transmit the received data to a cloud-based node (e.g., a cloud system).

Processor(s) 1610 may, in some aspects, be configured to generate, based on a desired system-level analysis, a data collection protocol for implementation at the plurality of DERs and to transmit, via a peer-to-peer network, the data collection protocol to the DERs via a set of edge nodes, the set of edge nodes including at least one master edge node (e.g., a super edge node) and multiple private-device edge nodes (e.g., privately-owned mobile devices). The processor(s) 1610 may also be configured to receive, based on the data collection protocol, data related to the multiple DERs from edge nodes in the set of edge nodes. The processor(s) 1610 may further be configured to generate a system recommendation based on the received data by processing the data with a machine trained network, the machine trained network having been trained with a combination of real-time data and simulation data.

Processor(s) 1610 may, in some aspects, be configured to identify a set of one or more private-device edge nodes capable of receiving data from one or more DERs and to transmit data received from a DER to the edge computing device. The processor(s) 1610 may also be configured to register the identified private-device edge nodes for inclusion in a peer-to-peer network and to transmit, to each of the identified private-device edge nodes in a peer-to-peer network, a data collection protocol for the DERs to implement. The processor(s) 1610 may further be configured to receive, based on the data collection protocol, data relating to the plurality of DERs from the identified private-device edge nodes through the peer-to-peer network.

Some portions of the detailed description are presented in terms of algorithms and symbolic representations of operations within a computer. These algorithmic descriptions and symbolic representations are the means used by those skilled in the data processing arts to convey the essence of their innovations to others skilled in the art. An algorithm is a series of defined steps leading to a desired end state or result. In example implementations, the steps carried out require physical manipulations of tangible quantities for achieving a tangible result.

Unless specifically stated otherwise, as apparent from the discussion, it is appreciated that throughout the description, discussions utilizing terms such as "processing," "computing," "calculating," "determining," "displaying," or the like, can include the actions and processes of a computer system or other information processing device that manipulates and transforms data represented as physical (electronic) quantities within the computer system's registers and memories into other data similarly represented as physical quantities within the computer system's memories or registers or other information storage, transmission or display devices.

Example implementations may also relate to an apparatus for performing the operations herein. This apparatus may be specially constructed for the required purposes, or it may include one or more general-purpose computers selectively activated or reconfigured by one or more computer programs. Such computer programs may be stored in a computer readable medium, such as a computer readable storage medium or a computer readable signal medium. A computer readable storage medium may involve tangible mediums such as, but not limited to optical disks, magnetic disks, read-only memories, random access memories, solid-state devices, and drives, or any other types of tangible or non-transitory media suitable for storing electronic information. A computer readable signal medium may include mediums such as carrier waves. The algorithms and displays presented herein are not inherently related to any particular computer or other apparatus. Computer programs can involve pure software implementations that involve instructions that perform the operations of the desired implementation.

Various general-purpose systems may be used with programs and modules in accordance with the examples herein, or it may prove convenient to construct a more specialized apparatus to perform desired method steps. In addition, the example implementations are not described with reference to any particular programming language. It will be appreciated that a variety of programming languages may be used to implement the teachings of the example implementations as described herein. The instructions of the programming language(s) may be executed by one or more processing devices, e.g., central processing units (CPUs), processors, or controllers.

As is known in the art, the operations described above can be performed by hardware, software, or some combination of software and hardware. Various aspects of the example implementations may be implemented using circuits and logic devices (hardware), while other aspects may be implemented using instructions stored on a machine-readable medium (software), which if executed by a processor, would cause the processor to perform a method to carry out implementations of the present application. Further, some example implementations of the present application may be performed solely in hardware, whereas other example implementations may be performed solely in software. Moreover, the various functions described can be performed in a single unit, or can be spread across a number of components in any number of ways. When performed by software, the methods may be executed by a processor, such as a general-purpose computer, based on instructions stored on a computer readable medium. If desired, the instructions can be stored on the medium in a compressed and/or encrypted format.

Moreover, other implementations of the present application will be apparent to those skilled in the art from consideration of the specification and practice of the teachings of the present application. Various aspects and/or components of the described example implementations may be used singly or in any combination. It is intended that the specification and example implementations be considered as examples only, with the true scope and spirit of the present application being indicated by the following claims.

## Claims

1. A method for managing a plurality of distributed energy resources (DERs) at an edge computing device, comprising:
receiving, from a cloud node, a data collection protocol;
transmitting the data collection protocol to each of a plurality of private-device edge nodes in a peer-to-peer network;
receiving, based on the data collection protocol, data relating to the plurality of DERs from the plurality of private-device edge nodes through the peer-to-peer network; and
transmitting the received data to a cloud-based node.

2. The method of claim 1, further comprising:
transmitting routing information to each of the plurality of private-device edge nodes, the routing information transmitted to each particular private-device edge node comprising a route for transmitting, from the private-device edge node to the edge computing device, data relating to at least one DER in the plurality of DERs.

3. The method of claim 1, wherein each of the plurality of DERs is associated with at least one of a private-device edge node or the edge computing device, and at least one DER in the plurality of DERs is associated with two or more private-device edge nodes, the method further comprising:
aggregating the received data before transmitting the received data, wherein aggregating the received data comprises removing duplicate data relating to a same DER received from more than one private-device edge node.

4. The method of claim 1, wherein the private-device edge nodes are mobile devices, the method further comprising:
registering private-device edge nodes for inclusion in the peer-to-peer network, by associating the private-device edge node with an account, the method further comprising:
validating that the data has been received from the private-device edge node; and
crediting the account associated with the private-device edge node based on the validation of the data being received.

5. The method of claim 1, further comprising:
transmitting a control message to at least one DER in the plurality of DERs via at least one private-device edge node of the plurality of private-device edge nodes,
wherein the control message indicates at least one of
at least one operating mode for the DER in a set of operating modes, the set of operating modes comprising one of a constant voltage operating mode and a constant power operating mode, the set of operating modes further associated with one of an energy production or energy storage function of the DER, and
a reference value related to a characteristic of the at least one DER, wherein the reference value related to the characteristic comprises one of a voltage magnitude, a power factor, and a reactive power operating point, the reference value further associated with one of an energy production or energy storage function of the DER.

6. The method of claim 1, further comprising:
diagnosing a state of the plurality of DERs based on the received data relating to the plurality of DERs; and
transmitting, to the cloud-based node, data regarding the state of the plurality of DERs.

7. The method of claim 1, wherein the data collection protocol indicates a set of data types to collect and a sampling value indicating an amount of data associated with the set of data types to transmit, wherein the data collection protocol indicates for the DER to collect a set of time-series data that comprises less than all data available at the DER.

8. The method of claim 1, further comprising:
detecting a failure state of a connection to the cloud-based node;
storing data relating to the plurality of DERs received after the failure state is detected; and
detecting a reestablished connection to the cloud-based node, wherein transmitting the received data to the cloud-based node comprises transmitting the stored data to the cloud-based node.

9. The method of claim 1, wherein the data relating to the plurality of DERs from the plurality of private-device edge nodes comprises encrypted data transmitted by the plurality of DERs to the plurality of private-device edge nodes, the method further comprising:
transmitting the data collection protocol to each of a set of DERs in the peer-to-peer network; and
receiving, based on the data collection protocol, unencrypted data relating to the set of DERs from the set of DERs through the peer-to-peer network, wherein transmitting the received data to the cloud-based node comprises transmitting the data received from the plurality of private-device edge nodes and the set of DERs.

10. A method for managing a plurality of distributed energy resources (DERs) at a cloud-based node, comprising:
generating, based on a desired system-level analysis, a data collection protocol for implementation at the plurality of DERs;
transmitting, via a peer-to-peer network, the data collection protocol to the DERs via a set of edge nodes, the set of edge nodes comprising at least one super edge node and a plurality of private-device edge nodes in communication with the super edge node;
receiving, based on the data collection protocol, data related to the plurality of DERs from edge nodes in the set of edge nodes; and
generating a system recommendation based on the received data by processing the data with a machine trained network, the machine trained network having been trained with a combination of real-time data and simulation data.

11. The method of claim 10, wherein the system recommendation comprises a data collection protocol, the method further comprising:
determining that the recommended data collection protocol is different from a previously-generated data collection protocol; and
transmitting, via the peer-to-peer network, the recommended data collection protocol to the DERs via the set of edge nodes.

12. The method of claim 10, wherein the system recommendation comprises a set of one or more recommended actions, the method further comprising:
displaying the set of one or more recommended actions to a user interface;
receiving input selecting at least one recommended action in the set of one or more recommended actions;
generating, based on the selected at least one recommended action, control data for the plurality of DERs; and
transmitting, based on the control data, a control message to the DERs via the set of edge nodes, wherein the control message indicates at least one of
at least one operating mode for the DER in a set of operating modes, the set of operating modes comprising one of a constant voltage operating mode and a constant power operating mode, the set of operating modes further associated with one of an energy production or energy storage function of the DER, and
a reference value related to a characteristic of the at least one DER, wherein the reference value related to the characteristic comprises one of a voltage magnitude, a power factor, and a reactive power operating point, the reference value further associated with one of an energy production or energy storage function of the DER.

13. The method of claim 10, further comprising:
storing the received data; and
generating, based on the stored received data, simulation data for training the machine-trained network for processing subsequently received data related to the plurality of DERs.

14. The method of claim 10, further comprising:
detecting a system-level failure based on the received data, wherein the generated recommendation comprises a recommendation relating to local power generation and provision by the plurality of DERs.

15. A method for managing a plurality of distributed energy resources (DERs) at an edge computing device, comprising:
identifying a set of one or more private-device edge nodes capable of receiving data from one or more DERs and transmitting data received from a DER to the edge computing device;
registering the identified private-device edge nodes for inclusion in a peer-to-peer network;
transmitting, to each of the registered private-device edge nodes in a peer-to-peer network, a data collection protocol for the DERs to implement; and
receiving, based on the data collection protocol, data relating to the plurality of DERs from the identified private-device edge nodes through the peer-to-peer network.

16. The method of claim 15, further comprising:
transmitting the received data to a cloud-based node.

17. The method of claim 15, further comprising:
receiving, from a cloud node, the data collection protocol.

18. The method of claim 15, wherein the private-device edge nodes are mobile devices and registering the private-device edge node comprises associating the private-device edge node with an account, the method further comprising:
validating that the data has been received from the private-device edge node; and
crediting the account associated with the private-device edge node based on the validation of the data being received.

19. The method of claim 15, wherein the data collection protocol indicates a set of time-series data to collect, wherein the set of time-series data comprises less than all data available at the DER.

20. The method of claim 15, wherein the data relating to the plurality of DERs from the plurality of private-device edge nodes comprises encrypted data transmitted by the plurality of DERs to the plurality of private-device edge nodes.
